(19) **Europäisches Patentamt / European Patent Office / Office européen des brevets**

(11) **EP 4 475 119 B1**

(12) **EUROPEAN PATENT SPECIFICATION**

(45) Date of publication and mention
of the grant of the patent:
**29.04.2026 Bulletin 2026/18**

(21) Application number: **24197317.1**

(22) Date of filing: **29.08.2024**

(51) International Patent Classification (IPC):
**G10L 15/16** (2006.01)      **G10L 15/02** (2006.01)
**G10L 15/32** (2013.01)

(52) Cooperative Patent Classification (CPC):
**G10L 15/16;** G10L 15/02; G10L 15/32

(54) **SPEECH RECOGNITION METHOD, METHOD FOR TRAINING DEEP LEARNING MODEL FOR SPEECH RECOGNITION, APPARATUS AND DEVICE**

SPRACHERKENNUNGSVERFAHREN, VERFAHREN ZUM TRAINING EINES MODELLS FÜR VIELSCHICHTIGES LERNEN ZUR SPRACHERKENNUNG, VORRICHTUNG UND GERÄT

MÉTHODE DE RECONNAISSANCE VOCALE, MÉTHODE DE FORMATION MODÈLE D'APPRENTISSAGE PROFOND POUR LA RECONNAISSANCE VOCALE, APPAREIL ET DISPOSITIF

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **29.08.2023 CN 202311104070**

(43) Date of publication of application:
**11.12.2024 Bulletin 2024/50**

(73) Proprietor: **Beijing Baidu Netcom Science Technology Co., Ltd.**
**Beijing 100085 (CN)**

(72) Inventors:
• **FU, Xiaoyin**
  **BEIJING, 100085 (CN)**
• **ZANG, Qiguang**
  **BEIJING, 100085 (CN)**
• **SHENG, Fenfen**
  **BEIJING, 100085 (CN)**
• **WANG, Haifeng**
  **BEIJING, 100085 (CN)**
• **JIA, Lei**
  **BEIJING, 100085 (CN)**

(74) Representative: **Laqua, Bernd Christian Kurt**
**Wuesthoff & Wuesthoff**
**Patentanwälte und Rechtsanwalt PartG mbB**
**Schweigerstraße 2**
**81541 München (DE)**

(56) References cited:
**EP-A1- 4 148 727      WO-A1-2021/225699**

• **KEYU AN ET AL: "CUSIDE: Chunking, Simulating Future Context and Decoding for Streaming ASR", ARXIV.ORG, CORNELL UNIVERSITY LIBRARY, 201 OLIN LIBRARY CORNELL UNIVERSITY ITHACA, NY 14853, 31 March 2022 (2022-03-31), XP091187572**

**Description**

**TECHNICAL FIELD**

The present disclosure relates to the technical field of artificial intelligence, in particular to the technical field of speech recognition and deep learning etc., and specifically relates to a speech recognition method, a training method for a deep learning model for speech recognition, a speech recognition apparatus, a training apparatus for a deep learning model for speech recognition, an electronic device, a computer-readable storage medium, and a computer program product.

**BACKGROUND**

Artificial intelligence is the discipline of studying how computers can simulate certain thinking processes and intelligent behaviors of a human being (such as learning, reasoning, thinking, planning, etc.), and there are both hardware-level and software-level technologies. The artificial intelligence hardware technologies generally include technologies such as sensors, special artificial intelligence chips, cloud computing, distributed storage, big data processing, etc. The artificial intelligence software technologies mainly include computer vision technology, speech recognition technology, natural language processing technology, machine learning/deep learning, big data processing technology, knowledge graph technology and other major technological directions.

Automatic speech recognition (ASR) is a technique for automatically converting an input speech signal into corresponding text using a computer. With the in-depth study of deep learning technology in the field of speech recognition, especially the presented end-to-end speech recognition technology, the accuracy of speech recognition is significantly improved while reducing the complexity of model modeling. Moreover, with the continuous popularization of various intelligent devices, large-vocabulary online speech recognition systems have been very widely used in various scenarios such as speech transliteration, intelligent customer service, in-vehicle navigation, smart home, and the like. In these speech recognition tasks, after the completion of the speech input, the user usually wants to get the response and feedback of the system quickly and accurately, which places a very high requirement on the accuracy and the real-time rate of the speech recognition model.

The speech recognition model disclosed in WO 2021/225699 A1 (GOOGLE LLC [US]) published in 2021, is an example for a real-time model.

The methods described in this section are not necessarily methods that have been previously conceived or employed. Unless otherwise indicated, it should not be assumed that any method described in this section is considered to be the prior art only due to its inclusion in this section. Similarly, the problems mentioned in this section should not be assumed to be recognized in any prior art unless otherwise indicated.

**SUMMARY**

The present disclosure provides a speech recognition method, a training method for a deep learning model for speech recognition, a speech recognition apparatus, a training apparatus for a deep learning model for speech recognition, an electronic device, a computer-readable storage medium, and a computer program product.

According to an aspect of the present disclosure, there is provided a computer-implemented speech recognition method, comprising: obtaining a first speech feature of a speech to-be-recognized, where the first speech feature comprises a plurality of speech segment features corresponding to a plurality of speech segments in the speech to-be-recognized; decoding the first speech feature using a first decoder to obtain a plurality of first decoding results corresponding to a plurality of words in the speech to-be-recognized, where each first decoding result of the plurality of first decoding results indicates a first recognition result of a word corresponding to the first decoding result; extracting a second speech feature from the first speech feature based on first a priori information, where first a priori information comprises the plurality of first decoding results, and the second speech feature comprises a plurality of first word-level audio features corresponding to the plurality of words; and decoding the second speech feature using a second decoder to obtain a plurality of second decoding results corresponding to the plurality of words, where each second decoding result of the plurality of second decoding results indicates a second recognition result of a word corresponding to the second decoding result.

According to another aspect of the present disclosure, there is provided a computer-implemented method for training a deep learning model for speech recognition, where the deep learning model comprises a first decoder and a second decoder, and the training method comprises: obtaining a sample speech and ground truth recognition results of a plurality of words in the sample speech; obtaining a first sample speech feature of the sample speech, where the first sample speech feature comprises a plurality of sample speech segment features corresponding to a plurality of sample speech segments in the sample speech; decoding the first sample speech feature using the first decoder to obtain a plurality of first sample decoding results corresponding to the plurality of words in the sample speech, where each first sample decoding result of the plurality of first sample decoding results indicates a first recognition result of a word corresponding to the first sample decoding result; extracting a second sample speech feature from the first sample speech feature based on first sample a priori information, where the first sample a priori information comprises the plurality of first sample decoding results, and the second sample speech feature comprises a plurality of first sample word-level audio features corresponding to the plurality of words; decoding the second sample speech feature using the second decoder to obtain a plurality of second sample decoding results corresponding to the plurality of words, where each second sample decoding result of the plurality of second sample decoding results indicates a second recognition result of a word corresponding to the second sample decoding result; and adjusting parameters of the deep learning model based on the ground truth recognition results, the first recognition results, and the second recognition results of the plurality of words to obtain a trained deep learning model.

According to another aspect of the present disclosure, there is provided a speech recognition apparatus, comprising: a speech feature encoding module configured to obtain a first speech feature of a speech to-be-recognized, where the first speech feature comprises a plurality of speech segment features corresponding to a plurality of speech segments in the speech to-be-recognized; a first decoder configured to decode the first speech feature to obtain a plurality of first decoding results corresponding to a plurality of words in the speech to-be-recognized, where each first decoding result of the plurality of first decoding results indicates a first recognition result of a word corresponding to the first decoding result; a word-level feature extraction module configured to extract a second speech feature from the first speech feature based on first a priori information, where the first a priori information comprises the plurality of first decoding results, and the second speech feature comprises a plurality of first word-level audio features corresponding to the plurality of words; and a second decoder configured to decode the second speech feature to obtain a plurality of second decoding results corresponding to the plurality of words, where each second decoding result of the plurality of second decoding results indicates a second recognition result of a word corresponding to the second decoding result.

According to another aspect of the present disclosure, there is provided an apparatus for training a deep learning model for speech recognition, where the deep learning model comprises a first decoder and a second decoder, and the training apparatus comprises: an obtaining module configured to obtain a sample speech and ground truth recognition results of a plurality of words in the sample speech; a speech feature encoding module configured to obtain a first sample speech feature of the sample speech, where the first sample speech feature comprises a plurality of sample speech segment features corresponding to a plurality of sample speech segments in the sample speech; a first decoder configured to decode the first sample speech feature to obtain a plurality of first sample decoding results corresponding to the plurality of words in the sample speech, where each first sample decoding result of the plurality of first sample decoding results indicates a first recognition result of a word corresponding to the first sample decoding result; a word-level feature extraction module configured to extract a second sample speech feature from the first sample speech feature based on first sample a priori information, where the first sample a priori information comprises the plurality of first sample decoding results, and the second sample speech feature comprises a plurality of first sample word-level audio features corresponding to the plurality of words; a second decoder configured to decode the second sample speech feature to obtain a plurality of second sample decoding results corresponding to the plurality of words, where each second sample decoding result of the plurality of second sample decoding results indicates a second recognition result of a word corresponding to the second sample decoding result; and an adjustment module configured to adjust parameters of the deep learning model based on the ground truth recognition results of the plurality of words, the first recognition results and the second recognition results to obtain a trained deep learning model.

According to another aspect of the present disclosure, there is provided an electronic device, comprising: at least one processor; and a memory communicatively connected to the at least one processor; wherein the memory stores instructions executable by the at least one processor, and the instructions are executed by the at least one processor to enable the at least one processor to execute the method described above.

According to another aspect of the present disclosure, there is provided a non-transitory computer-readable storage medium that stores computer instructions, wherein the computer instructions enable the computer to execute the method described above.

According to another aspect of the present disclosure, there is provided a computer program product, including a computer program, wherein the computer program implements the method described above when executed by a processor.

According to one or more embodiments of the present disclosure, the present disclosure obtains a first speech feature that includes a plurality of speech segment features of a speech to-be-recognized, and decodes the first speech feature to obtain a preliminary recognition result of the speech to-be-recognized, and then extract word-level audio features from the first speech feature using the preliminary recognition result, and then decodes the word-level audio features to obtain a final recognition result.

By using the preliminary recognition result of the speech to-be-recognized as a priori, the word-level equal-length uniform audio feature representation is extracted from the unequal-length speech feature information in the frame-level audio information, and the word-level audio feature is decoded to obtain the final recognition result, by which the problem of inconsistent feature representation lengths of traditional speech subframes is solved, the precision of speech recognition is improved, and the computational efficiency is improved.

It should be understood that the content described in this section is not intended to identify key or important features of the embodiments of the present disclosure, nor is it intended to limit the scope of the present disclosure. Other features of the present disclosure will become readily understood from the following specification.

## BRIEF DESCRIPTION OF THE DRAWINGS

The drawings exemplarily illustrate embodiments and constitute a part of the specification and are used in conjunction with the textual description of the specification to explain the exemplary implementations of the explanation embodiments. The illustrated embodiments are for illustrative purposes only and do not limit the scope of the claims. Throughout the drawings, like reference numerals refer to similar but not necessarily identical elements.

FIG. 1 illustrates a schematic diagram of an exemplary system in which various methods described herein may be implemented according to embodiments of the present disclosure.

FIG. 2 illustrates a flowchart of a speech recognition method according to an embodiment of the present disclosure.

FIG. 3 illustrates a flowchart for obtaining a first speech feature of a speech to-be-recognized according to an embodiment of the present disclosure.

FIG. 4 illustrates a schematic diagram of a Conformer streaming multi-layer truncated attention model based on historical feature abstraction according to an embodiment of the present disclosure.

FIG. 5 illustrates a flowchart for extracting a second speech feature from a first speech feature according to an embodiment of the present disclosure.

FIG. 6 illustrates a flowchart of a speech recognition method according to an embodiment of the present disclosure.

FIG. 7 illustrates a flowchart of a speech recognition method according to an embodiment of the present disclosure.

FIG. 8 illustrates a schematic diagram of an end-to-end large speech model according to an embodiment of the present disclosure.

FIG. 9 illustrates a flowchart of a training method for a deep learning model for speech recognition according to an embodiment of the present disclosure.

FIG. 10 illustrates a structural block diagram of a speech recognition apparatus according to an embodiment of the present disclosure.

FIG. 11 illustrates a structural block diagram of a training apparatus for a deep learning model for speech recognition according to an embodiment of the present disclosure.

FIG. 12 illustrates a structural block diagram of an exemplary electronic device that can be used to implement embodiments of the present disclosure.

## DETAILED DESCRIPTION

The exemplary embodiments of the present disclosure are described below in conjunction with the accompanying drawings, including various details of the embodiments of the present disclosure to facilitate understanding, and they should be considered as exemplary only. Therefore, one of ordinary skill in the art will recognize that various changes and modifications may be made to the embodiments described herein without departing from the scope of the present disclosure. Similarly, descriptions of well-known functions and structures are omitted in the following description for the purpose of clarity and conciseness.

In the present disclosure, unless otherwise specified, the terms "first", "second" and the like are used to describe various elements and are not intended to limit the positional relationship, timing relationship, or importance relationship of these elements, and such terms are only used to distinguish one element from another. In some examples, the first element and the second element may refer to the same instance of the element, while in some cases they may also refer to different instances based on the description of the context.

The terminology used in the description of the various examples in this disclosure is for the purpose of describing particular examples only and is not intended to be limiting. Unless the context clearly indicates otherwise, if the number of elements is not specifically defined, the element may be one or more. In addition, the terms "and/or" used in the present disclosure encompass any one of the listed items and all possible combinations thereof.

In the related art, some speech recognition methods use a framed speech feature to learn the representation of audio feature. However, because the content information contained in a speech changes continuously along with the speech speed, tone, intonation, and the like of the speaker, and the expression of the same content could be completely different between different speakers, therefore this kind of feature representation method may cause inconsistent representation lengths of the framed speech feature, and affect the accuracy of speech recognition, and there are a large number of redundant features in the feature representation, thus resulting in low computational efficiency.

To solve the above problem, the present disclosure obtains a first speech feature that includes a plurality of speech segment features of a speech to-be-recognized, and decodes the first speech feature to obtain a preliminary recognition result of the speech to-be-recognized, and then extract word-level audio features from the first speech feature using the preliminary recognition result, and then decodes the word-level audio features to obtain a final recognition result. By using the preliminary recognition result of the speech to-be-recognized as a priori, the word-level equal-length uniform audio feature representation is extracted from the unequal-length speech feature information in the frame-level audio information, and the word-level audio feature is decoded to obtain the final recognition result, by which the problem of inconsistent feature representation lengths of traditional speech subframes is solved, the precision of speech recognition is improved, and the computational efficiency is improved.

Embodiments of the present disclosure will be described in detail below with reference to the accompanying drawings.

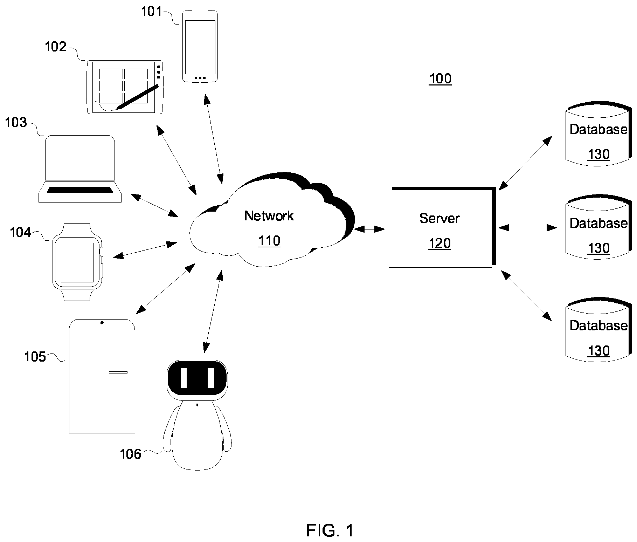

FIG. 1 illustrates a schematic diagram of an exemplary system 100 in which various methods and apparatuses described herein may be implemented in accordance with embodiments of the present disclosure. Referring to FIG. 1, the system 100 includes one or more client devices 101, 102, 103, 104, 105, and 106, a server 120, and one or more communication networks 110 that couple the one or more client devices to the server 120. The client devices 101, 102, 103, 104, 105, and 106 may be configured to execute one or more applications.

In embodiments of the present disclosure, the server 120 may run one or more services or software applications that enable the execution of the speech recognition method and/or the training method for a deep learning model for speech recognition according to the present disclosure. In an exemplary embodiment, a complete speech recognition system or some components of the speech recognition system may be deployed on the server, for example a large speech model.

In some embodiments, the server 120 may further provide other services or software applications, which may include non-virtual environments and virtual environments. In some embodiments, these services may be provided as web-based services or cloud services, such as to users of the client devices 101, 102, 103, 104, 105, and/or 106 under a Software as a Service (SaaS) model.

In the configuration shown in FIG. 1, the server 120 may include one or more components that implement functions performed by the server 120. These components may include software components, hardware components, or a combination thereof that are executable by one or more processors. A user operating the client devices 101, 102, 103, 104, 105, and/or 106 may sequentially utilize one or more client applications to interact with the server 120 to utilize the services provided by these components. It should be understood that a variety of different system configurations are possible, which may be different from the system 100. Therefore, FIG. 1 is an example of a system for implementing the various methods described herein and is not intended to be limiting.

The client devices 101, 102, 103, 104, 105, and/or 106 may provide interfaces that enable the user of the client devices to interact with the client devices. The client devices may also output information to the user via the interface. Although FIG. 1 depicts only six client devices, those skilled in the art will understand that the present disclosure may support any number of client devices.

The client devices 101, 102, 103, 104, 105, and/or 106 may include various types of computer devices, such as portable handheld devices, general-purpose computers (such as personal computers and laptop computers), workstation computers, wearable devices, smart screen devices, self-service terminal devices, service robots, in-vehicle devices, gaming systems, thin clients, various messaging devices, sensors or other sensing devices, and the like. These computer devices may run various types and versions of software applications and operating systems, such as Microsoft Windows, Apple iOS, Unix-like operating systems, Linux or Linux-like operating systems; or include various mobile operating systems, such as Microsoft Windows Mobile OS, iOS, Windows Phone, Android. The portable handheld devices may include cellular telephones, smart phones, tablet computers, personal digital assistants (PDA), and the like. The wearable devices may include head-mounted displays (such as smart glasses) and other devices. The gaming systems may include various handheld gaming devices, Internet-enabled gaming devices, and the like. The client devices can execute various different applications, such as various Internet related applications, communication applications (e.g., e-mail applications), Short Message Service (SMS) applications, and may use various communication protocols.

The network 110 may be any type of network well known to those skilled in the art, which may support data communication using any of a variety of available protocols (including but not limited to TCP/IP, SNA, IPX, etc.). By way of example only, one or more networks 110 may be a local area network (LAN), an Ethernet-based network, a token ring, a wide area network (WAN), an Internet, a virtual network, a virtual private network (VPN), an intranet, an external network, a blockchain network, a public switched telephone network (PSTN), an infrared network, a wireless network (including, for example, Bluetooth, WiFi), and/or any combination of these and/or other networks.

The server 120 may include one or more general-purpose computers, a dedicated server computer (e.g., a PC (personal computer) server, a UNIX server, a mid-end server), a blade server, a mainframe computer, a server cluster, or any other suitable arrangement and/or combination. The server 120 may include one or more virtual machines running a virtual operating system, or other computing architectures involving virtualization (e.g., one or more flexible pools of a logical storage device that may be virtualized to maintain virtual storage devices of a server). In various embodiments, the server 120 may run one or more services or software applications that provide the functions described below.

The computing unit in the server 120 may run one or more operating systems including any of the operating systems described above and any commercially available server operating system. The server 120 may also run any of a variety of additional server applications and/or intermediate layer applications, including a HTTP server, an FTP server, a CGI server, a Java server, a database server, etc.

In some implementations, the server 120 may include one or more applications to analyze and merge data feeds and/or event updates received from the user of the client devices 101, 102, 103, 104, 105, and/or 106. The server 120 may also include one or more applications to display the data feeds and/or the real-time events via one or more display devices of the client devices 101, 102, 103, 104, 105, and/or 106.

In some embodiments, the server 120 may be a server of a distributed system, or a server incorporating a blockchain. The server 120 may also be a cloud server, or an intelligent cloud computing server or an intelligent cloud host with an artificial intelligence technology. The cloud server is a host product in the cloud computing service system used to overcome the defects of management difficulty and weak service expansibility which exist in the conventional physical host and Virtual Private Server (VPS) service.

The system 100 may also include one or more databases 130. In certain embodiments, these databases may be used to store data and other information. For example, one or more of the databases 130 may be used to store information such as audio files and video files. The data repositories 130 may reside in various locations. For example, the data repository used by the server 120 may be local to the server 120, or may be remote from the server 120 and may communicate with the server 120 via a network-based or dedicated connection. The data repository 130 may be of a different type. In some embodiments, the database used by the server 120 may be, for example, a relational database. One or more of these databases may store, update, and retrieve data to and from the database in response to a command.

In some embodiments, one or more of the databases 130 may also be used by an application to store application data. The database used by an application may be a different type of database, such as a key-value repository, an object repository, or a conventional repository supported by a file system.

The system 100 of FIG. 1 may be configured and operated in various ways to enable application of various methods and devices described according to the present disclosure.

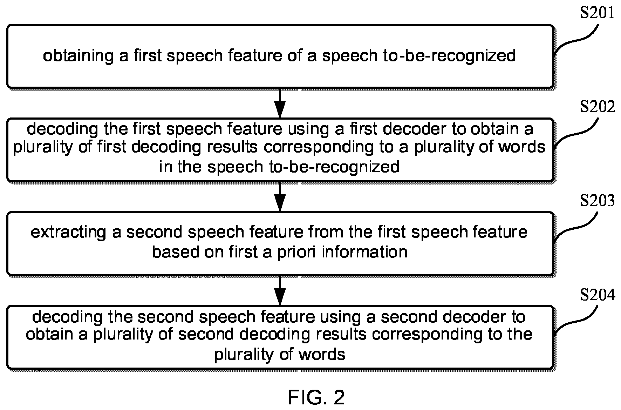

According to an aspect of the present disclosure, there is provided a speech recognition method. As shown in Fig. 2, the speech recognition method comprises: Step S201, obtaining a first speech feature of a speech to-be-recognized, and the first speech feature comprises a plurality of speech segment features corresponding to a plurality of speech segments in the speech to-be-recognized; Step S202, decoding the first speech feature using a first decoder to obtain a plurality of first decoding results corresponding to a plurality of words in the speech to-be-recognized, and the first decoding result indicates the first recognition result of the corresponding word; Step S203, extracting a second speech feature from the first speech feature based on first a priori information, the first a priori information comprises the plurality of first decoding results, and the second speech feature comprises a plurality of first word-level audio features corresponding to the plurality of words; and Step S204, decoding the second speech feature using a second decoder to obtain a plurality of second decoding results corresponding to the plurality of words, and the second decoding result indicates the second recognition result of the corresponding word.

Therefore, by using the preliminary recognition result of the speech to-be-recognized as a priori, the word-level equal-length uniform audio feature representation is extracted from the unequal-length speech feature information in the frame-level audio information, and the word-level audio feature is decoded to obtain the final recognition result, by which the problem of inconsistent feature representation lengths of traditional speech subframes is solved, the precision of speech recognition is improved, and the computational efficiency is improved.

In order to explain the technical concept, the speech to-be-recognized in the embodiments of the present disclosure comprises speech content corresponding to a plurality of words. In step S201, the first speech feature of the speech to-be-recognized can be obtained by using various types of existing speech feature extraction methods. The plurality of speech segments may be obtained by truncating the speech to-be-recognized with a fixed length, or may be obtained by using other truncation methods; the plurality of speech segment features may be in a one-to-one correspondence with the plurality of speech segments, or the same speech segment may correspond to the plurality of speech segment features (as will be described below), which are not limited herein.

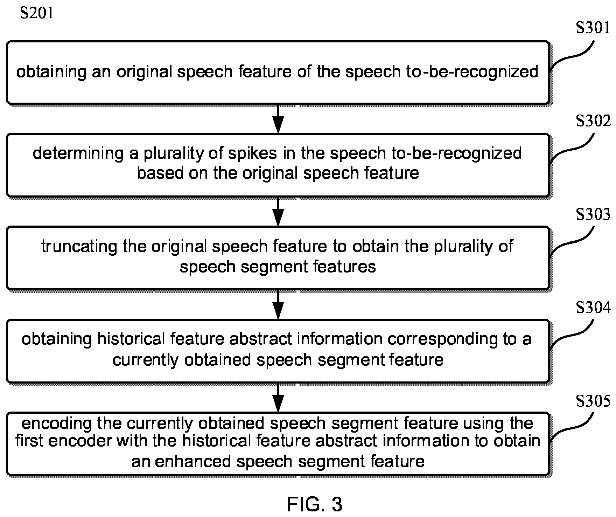

According to some embodiments, as shown in FIG. 3, in step S201, obtaining the first speech feature of the speech to-be-recognized may comprise: step S301, obtaining an original speech feature of the speech to-be-recognized; step S302, determining a plurality of spikes in the speech to-be-recognized based on the original speech feature; and step S303, truncating the original speech feature to obtain the plurality of speech segment features in a one-to-one correspondence with the plurality of spikes.

Since spike signals generally have correspondence with each word in the speech to-be-recognized, by first obtaining the spike signals of the speech to-be-recognized and obtaining the plurality of speech segment features in one-to-one correspondence with the plurality of spikes based on the spike information, the first decoder can decode the first speech feature driven by the spike information, thereby obtaining an accurate preliminary recognition result.

In step S301, speech feature extraction may be performed on a plurality of speech frames included in the speech to-be-recognized to obtain the original speech feature that includes the plurality of speech frame features.

In step S302, the original speech feature may be processed using a binary CTC (Connectionist Temporal Classification) module that is modeled based on a Causal Conformer to obtain CTC spike information, thereby determining the plurality of spikes in the speech to-be-recognized. It can be understood that the plurality of spikes in the speech to-be-recognized may also be determined in other ways, which is not limited herein.

In step S303, truncating the original speech feature may be to truncate the plurality of speech frame features corresponding to the plurality of speech frames into a plurality of groups of speech frame features, and each group of speech frames/speech frame features form a speech segment/speech segment feature.

According to some embodiments, in step S303, truncating the original speech feature to obtain the plurality of speech segment features in a one-to-one correspondence with the plurality of spikes may comprise: truncating the original speech feature based on a predetermined time length, and using the speech segment feature of the speech segment where each spike of the plurality of spikes is located as the speech segment feature corresponding to the spike. Therefore, in this way, the speech segment features corresponding to each spike have the same length. It should be noted that, in this manner, if more than one spike are included in a speech segment, the speech segment feature of the speech segment will be used as the speech segment corresponding to each spike of these spikes at the same time.

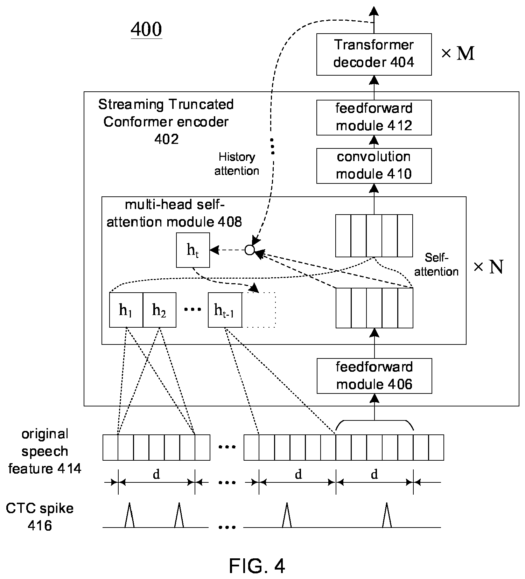

It may be understood that the predetermined time length may be set based on requirements. In the embodiment described in FIG. 4, the predetermined time length d is five speech frames.

According to some embodiments, in step S303, truncating the original speech feature to obtain the plurality of speech segment features in one-to-one correspondence with the plurality of spikes may comprise: truncating the original speech feature based on the plurality of spikes, and using the feature of the speech segment between every two adjacent spikes as the speech segment feature corresponding to one of the spikes.

Therefore, in this way, the speech segment feature corresponding to each spike includes complete speech information of the speech segment that is formed between two adjacent spikes.

In some embodiments, down-sampling (e.g., convolutional down-sampling) may be performed on the original speech feature before using the original speech feature (CTC module or the preliminary speech recognition).

According to some embodiments, the plurality of speech segment features can be sequentially obtained by performing streaming truncation on the original speech feature. In step S202, decoding the first speech feature using the first decoder may comprise: sequentially performing streaming decoding on the plurality of speech segment features using the first decoder. Therefore, the preliminary recognition result of the speech to-be-recognized can be quickly obtained by performing streaming truncation on the original speech feature and performing streaming decoding on the first speech feature.

According to some embodiments, the speech segment feature may be further encoded using a manner that is based on historical feature abstraction to enhance the description capability of the speech segment feature, thereby improving the accuracy of the preliminary recognition result obtained after decoding the speech segment feature. As shown in FIG. 3, in step S201, obtaining the first speech feature of the speech to-be-recognized may further comprise: step S304, for the currently obtained speech segment feature, obtaining corresponding historical feature abstract information, and the historical feature abstract information is obtained by performing attention modeling on the prior speech segment feature using the first decoding result corresponding to the prior speech segment feature; and step S 305, encoding the currently obtained speech segment feature using the first encoder combined with the historical feature abstract information to obtain a corresponding enhanced speech segment feature.

In some embodiments, the historical feature abstraction information corresponding to the currently obtained speech segment feature includes a plurality of historical feature abstraction information corresponding to each prior speech segment feature, and each historical feature abstraction information of the prior speech segment feature is obtained by performing attention modeling on the prior speech segment feature using the first decoding result corresponding to the prior speech segment feature. In an exemplary embodiment, an attention mechanism calculation may be performed by using the first decoding result as the query feature Q and using the prior speech segment feature as the key feature K and the value feature V to obtain the historical feature abstract information of the prior speech segment feature. The calculation process of the attention mechanism may be expressed as:

$$\text{Attention}(Q, K, V) = \text{softmax}\left(\frac{QK^T}{\sqrt{d_k}}\right)V$$

where $d_k$ is the dimension of a feature. It can be understood that other feature obtainments and attention mechanism calculations that based on query features, key features and value features in the present disclosure may all refer to the formula. It should be noted that the number of features obtained in this manner is the same as the number of features included in the query feature.

According to some embodiments, in step S305, encoding the currently obtained speech segment feature using the first encoder combined with the historical feature abstract information to obtain the corresponding enhanced speech segment feature may comprise: using the currently obtained speech segment feature as the query feature Q of the first encoder, and using the concatenation result of the historical feature abstract information and the currently obtained speech segment feature as the key feature K and value feature V of the first encoder to obtain the corresponding enhanced speech segment feature output by the first encoder.

Therefore, in this way, more temporal relationships and linguistic relationships in the speech feature can be fully explored, thereby significantly improving the historical abstraction capability of the model and improving the accuracy of the decoding result of the enhanced speech fragment feature.

In some embodiments, the first encoder and the first decoder may together form a Conformer Streaming Multi-Layer Truncated Attention (SMLTA) model that is based on historical feature abstraction. As shown in FIG. 4, the Conformer SMLTA model 400 mainly comprises two parts, one is the Streaming Truncated Conformer encoder 402, i.e., the first encoder, and the other is the Transformer decoder 404, i.e., the first decoder.

The Streaming Truncated Conformer encoder comprises N stacked Conformer modules, and each Conformer module comprises a feedforward module 406, a multi-head self-attention module 408, a convolution module 410, and a feedforward module 412. The Conformer modules encode the speech segment feature layer-by-layer to obtain a corresponding implicit feature (i.e., the enhanced speech segment feature). The Transformer decoder comprises M stacked Transformer modules, and filters the implicit feature output by the encoder using a streaming attention mechanism and outputs the first decoding result indicating the preliminary recognition result.

FIG. 4 also illustrates the principle of Conformer SMLTA which is based on historical feature abstraction. The input original speech feature 414 is first segmented into speech segment features with the same length, and then the streaming Conformer encoder performs feature encoding on each speech segment feature. The Transformer decoder counts the number of spikes included in each audio segment based on the spike information 416 of the binary CTC model, and decodes and outputs the recognition result of the current segment based on the number of spikes. Finally, correlation attention modeling is performed on the implicit feature of each layer of the Conformer encoder based on the decoding result of the current segment to obtain a historical feature abstraction contained in the corresponding speech segment, and the historical feature abstraction information, obtained from each layer of abstraction, and the currently obtained speech segment feature are concatenated together for the computation of the next segment.

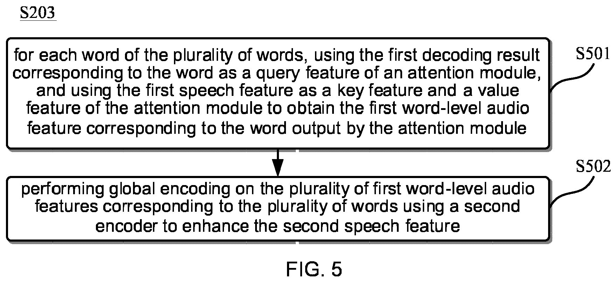

According to some embodiments, as shown in FIG. 5, in step S203, extracting the second speech feature from the first speech feature based on the first a priori information may comprise: step S501, for each of the plurality of words, using the first decoding result corresponding to the word as the query feature Q of the attention module, and using the first speech feature as the key feature K and the value feature V of the attention module to obtain the first word-level audio feature corresponding to the word output by the attention module.

Therefore, by using the first decoding results corresponding to each of the plurality of words as the query feature Q and using the first speech feature as the key feature K and the value feature V, the preliminary recognition result of the speech to-be-recognized can be effectively used as the prior information to obtain the word level audio features corresponding to each word.

In some embodiments, the first word level audio feature output by the attention module may be calculated by substituting corresponding Q, K, and V into the formula of the attention mechanism described above.

According to some embodiments, as shown in FIG. 5, in step S203, extracting the second speech feature from the first speech feature based on the first a priori information may comprise: step S502, performing global encoding on the plurality of first word-level audio features corresponding to the plurality of words using the second encoder to obtain an enhanced second speech feature.

Therefore, by performing global encoding on the plurality of first word-level audio features corresponding to the plurality of words, the deficiency that the first encoder cannot encode the global feature information due to the fact that streaming recognition needs to be met is effectively compensated, and the description capability of the equal-length uniform feature representation is significantly improved.

In some embodiments, the second encoder may be a Conformer encoder and may include an N-layer stacked Conformer module. Since the Conformer module fuses the attention model and the convolution model at the same time, the long-distance relationship and the local relationship in the audio feature can be effectively modeled at the same time, thereby greatly improving the description capability of the model.

It may be understood that extracting the second speech feature from the first speech feature based on the first a priori information may also be implemented in a manner other than the attention mechanism and the Conformer encoder, which is not limited herein.

According to some embodiments, in step S204, decoding the second speech feature using the second decoder to obtain the plurality of second decoding results corresponding to the plurality of words may comprise: for each of the plurality of words, using the first decoding result corresponding to the word as the query feature Q of the second decoder, and using the second speech feature as the key feature K and the value feature V of the second decoder to obtain the second decoding result corresponding to the word output by the second decoder.

Therefore, by using the first decoding results corresponding to each of the plurality of words as the query feature Q and using the second speech feature as the key feature K and the value feature V, the preliminary recognition result of the speech to-be-recognized can be effectively used as the prior information to obtain the second decoding results corresponding to each word.

In addition, the conventional Encoder-Decoder structure or Decoder-Only structure encounters the problem of cache loading during decoding. Although the GPU's computational speed has been significantly improved at present, limited by the development of computer hardware resources, the speed of the decoder loading model parameters into the Cache during computation has not been significantly increased, which seriously limits the decoding efficiency of speech recognition models. In addition, both the Encoder-Decoder structure and the Decoder-Only structure need to rely on the decoding result of the previous moment to perform the calculation of the next moment during decoding, and the recursive calculation method requires the model to be repeatedly loaded into the Cache, which results in a certain calculation delay. In particular, with the increase of the parameters of the large speech model, the problem of calculation delay caused by cache loading is more prominent, and the requirement of real-time decoding for online decoding cannot be met. In addition, by using the obtained first decoding result corresponding to each of the plurality of words is used as the query feature of the second decoder, the final recognition result can be obtained with only one parallel calculation, thereby the cache loading problem encountered by large models can be effectively solved.

According to some embodiments, the second decoder may comprise a forward decoder and a backward decoder, each of which may be configured to, for each of the plurality of words, use the first decoding result of the word as the input query feature Q, and use the second speech feature as an the input key feature K and the value feature V, the forward decoder may be configured to apply a left-to-right temporal mask to input features, and the backward decoder may be configured to apply a right-to-left temporal mask to input features.

Therefore, by apply a left-to-right temporal mask to input features of the forward decoder and apply a right-to-left temporal mask to input features of the backward decoder, language modeling can be performed in two different directions, the context of the language is modeled at the same time, and the prediction capability of the model is further improved.

In some embodiments, the forward decoder may also be referred to as a Left-Right Transformer decoder, and the backward decoder may also be referred to as a Right-Left Transformer decoder. Both the forward decoder and the backward decoder may include a Transformer module with K stacked time masks.

According to some embodiments, for each of the plurality of words, using the first decoding result of the word as the query feature Q of the second decoder and using the second speech feature as the key feature K and the value feature V of the second decoder to obtain the second decoding result corresponding to the word output by the second decoder may comprise: fusing a plurality of forward decoding features corresponding to the plurality of words output by the forward decoder and a plurality of backward decoding features corresponding to the plurality of words output by the backward decoder to obtain a plurality of fusion features corresponding to the plurality of words; and obtaining the plurality of second decoding results based on the plurality of fusion features.

In some embodiments, the forward decoding feature and the backward decoding feature may be directly added to obtain the corresponding fusion feature. Processing such as Softmax and the like may be performed on the fusion feature to obtain the final recognition result.

After obtaining the second decoding result, the second decoding result can be reused as the a prior information of the recognition result to re-extract the word-level audio feature, or to re-decode using the second decoder.

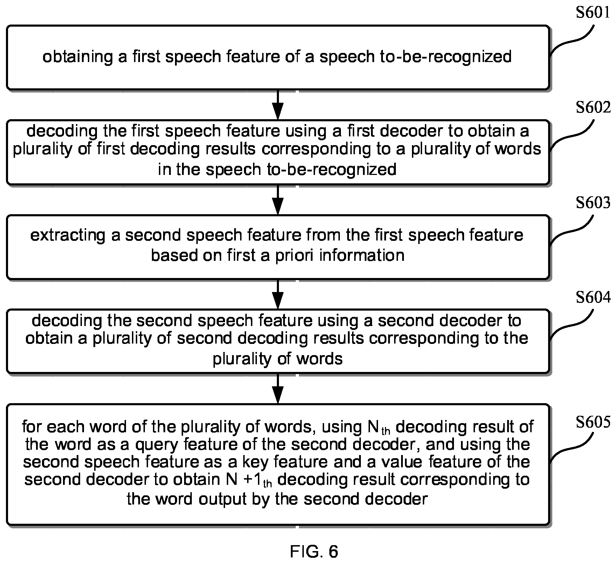

According to some embodiments, as shown in FIG. 6, the speech recognition method may further comprise: step S605, for each of the plurality of words, using the $N_{th}$ decoding result of the word as the query feature Q of the second decoder, and using the second speech feature as the key feature K and the value feature V of the second decoder to obtain the $N+1_{th}$ decoding result corresponding to the word output by the second decoder, wherein N is an integer greater than or equal to 2. It can be understood that the operations in steps S601- S604 in FIG. 6 are similar to those in steps S201-S204 in FIG. 2, and details are not described herein.

Therefore, the accuracy of speech recognition can be improved by performing multiple iterative decoding using the second decoder.

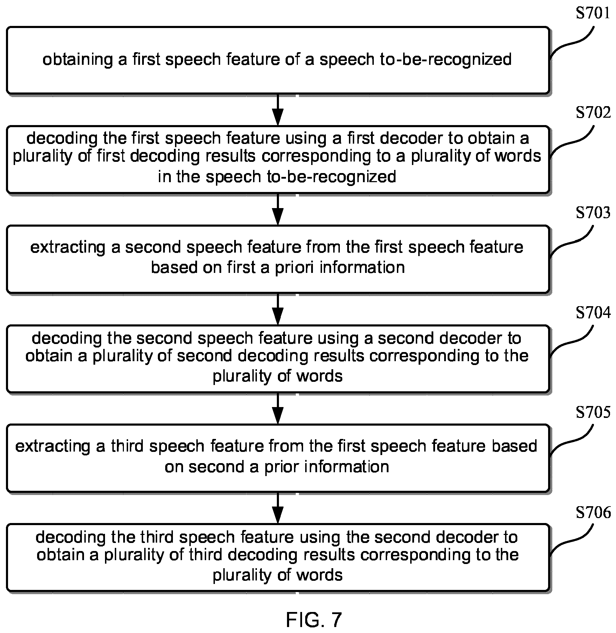

According to some embodiments, as shown in FIG. 7, the speech recognition method may further comprise: step S705, extracting a third speech feature from the first speech feature based on second a prior information, the second a prior information comprises the plurality of second decoding results, and the third speech feature comprises a plurality of second word-level audio features corresponding to the plurality of words; and step S706, decoding the third speech feature using the second decoder to obtain a plurality of third decoding results corresponding to the plurality of words, and the third decoding result indicates the third recognition result of the corresponding word.

Therefore, the accuracy of speech recognition can be further improved by re-using the second decoding result as priori of the recognition result to re-extract word-level audio features and then decoding the new word-level audio features using the second decoder.

It can be understood that the operations in steps S701-S704 in FIG. 7 are similar to those in steps S201-S204 in FIG. 2, and details are not described herein.

According to some embodiments, the second decoder may be a large speech model or a large audio model. The model scale of the second decoder can reach hundreds of billion parameters, by which the language information contained in the speech can be fully explored and the modeling capability of the model can be greatly improved. In some exemplary embodiments, the number of parameters of the large speech model or the large audio model as the second decoder may be 2B, or may be others that are more than billion levels.

In some embodiments, the model scale of the first encoder (or the model formed by the first encoder and the first decoder) may be, for example, a few hundred megabits. Since its function is to streaming output the preliminary recognition result of the speech to-be-recognized, large-scale parameters are not needed.

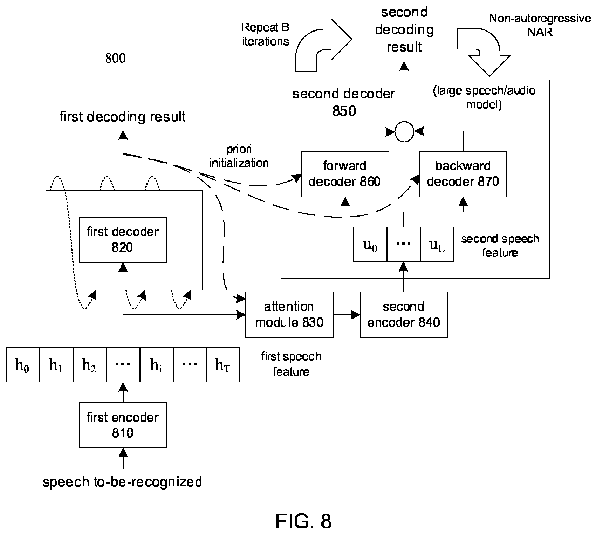

In some embodiments, as shown in FIG. 8, the first encoder 810 (SMLTA2 Encoder), the first decoder 820 (SMLTA2 Decoder), the attention module 830 (Attention Module), the second encoder 840 (Conformer Encoder), and the second decoder 850 (including the forward Decoder 860 (Left-Right Transformer Decoder) and the backward Decoder 870 (Right-Left Transformer Decoder)) may collectively form the end-to-end large speech model 800.

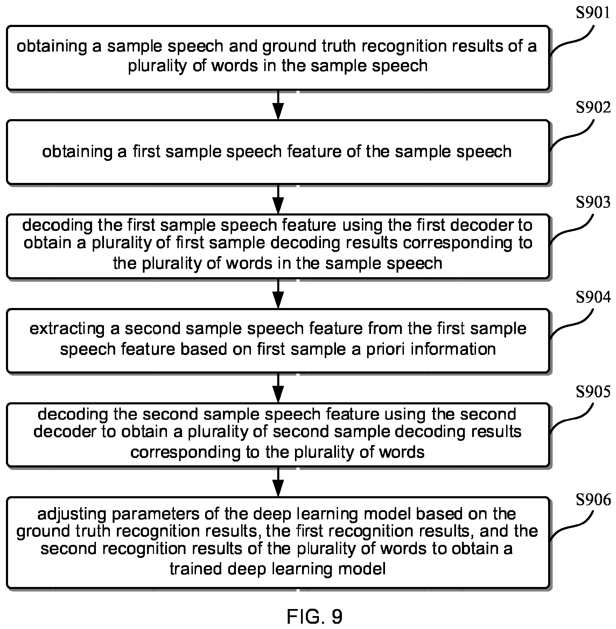

According to another aspect of the present disclosure, there is provided a training method for a deep learning model for speech recognition. The deep learning model comprises a first decoder and a second decoder. As shown in Fig. 9, the training method comprises: step S901, obtaining a sample speech and ground truth recognition results of a plurality of words in the sample speech; step S902, obtaining a first sample speech feature of the sample speech, and the first sample speech feature comprises a plurality of sample speech segment features corresponding to a plurality of sample speech segments in the sample speech; step S903, decoding the first sample speech feature using the first decoder to obtain a plurality of first sample decoding results corresponding to the plurality of words in the sample speech, and the first sample decoding result indicates the first recognition result of the corresponding word; step S904, extracting a second sample speech feature from the first sample speech feature based on first sample a priori information, the first sample a priori information comprises the plurality of first sample decoding results, and the second sample speech feature comprises a plurality of first sample word-level audio features corresponding to the plurality of words; step S905, decoding the second sample speech feature using the second decoder to obtain a plurality of second sample decoding results corresponding to the plurality of words, and the second sample decoding result indicates the second recognition result of the corresponding word; and step S906, adjusting parameters of the deep learning model based on the ground truth recognition results, the first recognition results, and the second recognition results of the plurality of words to obtain a trained deep learning model. It can be understood that the operations in steps S902-S905 in FIG. 9 are similar to those in steps S201-S204 in FIG. 2, and details are not described herein.

Therefore, in this way, the trained deep learning model can use the preliminary recognition result of the speech to-be-recognized as a priori, and extract the word-level equal-length uniform audio feature representation from the unequal-length speech feature information in the frame-level audio information, and decode the word-level audio feature to obtain the final recognition result, by which the problem of inconsistent feature representation lengths of traditional speech subframes is solved, the precision of speech recognition is improved, and the computational efficiency is improved.

In some embodiments, the deep learning model may further include other modules involved in the speech recognition method described above, such as a first encoder, a second encoder, an attention module, and the like. The operation of each module in the deep learning model may also refer to the operation of the corresponding module in the speech recognition method described above.

In some embodiments, in step S906, a first loss value may be determined based on the real recognition result and the second recognition result, and the parameters of the deep learning model are adjusted based on the first loss value. In some embodiments, a second loss value may also be determined based on the real recognition result and the first recognition result, and the parameters of the deep learning model are adjusted based on the first loss value and the second loss value. In some embodiments, the second loss value may be used to adjust the parameters of the first decoder (and the first encoder), the first loss value may be used to adjust the parameters of the second decoder (and the attention module, the second encoder), and may also be used to end-to-end adjust the parameters of the deep learning model. In addition, some of the modules in the deep learning model may be individually trained or pre-trained in advance. It can be understood that other manners can also be used to adjust the parameters of the deep learning model, which is not limited herein.

It may be understood that the speech recognition method described above may be executed using a deep learning model obtained by training according to the above training method.

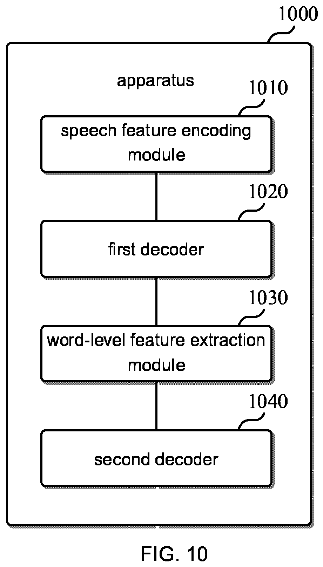

According to another aspect of the present disclosure, there is provided a speech recognition apparatus. As shown in Fig. 10, the apparatus 1000 comprises: a speech feature encoding module 1010 configured to obtain a first speech feature of a speech to-be-recognized, and the first speech feature comprises a plurality of speech segment features corresponding to a plurality of speech segments in the speech to-be-recognized; a first decoder 1020 configured to decode the first speech feature to obtain a plurality of first decoding results corresponding to a plurality of words in the speech to-be-recognized, and the first decoding result indicates the first recognition result of the corresponding word; a word-level feature extraction module 1030 configured to extract a second speech feature from the first speech feature based on first a priori information, the first a priori information comprises the plurality of first decoding results, and the second speech feature comprises a plurality of first word-level audio features corresponding to the plurality of words; and a second decoder 1040 configured to decode the second speech feature to obtain a plurality of second decoding results corresponding to the plurality of words, and the second decoding result indicates the second recognition result of the corresponding word. It can be understood that the operations in modules 1010-1040 in the apparatus 1000 are similar to those in steps S201-S204 in FIG. 2, and details are not described herein.

According to some embodiments, the speech feature encoding module 1010 may be configured: to obtain an original speech feature of the speech to-be-recognized; to determine a plurality of spikes in the speech to-be-recognized based on the original speech feature; and to truncate the original speech feature to obtain the plurality of speech segment features in a one-to-one correspondence with the plurality of spikes.

According to some embodiments, truncating the original speech feature to obtain the plurality of speech segment features in a one-to-one correspondence with the plurality of spikes may comprise: truncating the original speech feature based on a predetermined time length, and using the speech segment feature of the speech segment where each spike of the plurality of spikes is located as the speech segment feature corresponding to the spike.

According to some embodiments, truncating the original speech feature to obtain the plurality of speech segment features in a one-to-one correspondence with the plurality of spikes may comprise: truncating the original speech feature based on the plurality of spikes, and using the feature of the speech segment between every two adjacent spikes as the speech segment feature corresponding to one of the spikes.

According to some embodiments, the plurality of speech segment features may be sequentially obtained by performing streaming truncation on the original speech feature.

According to some embodiments, the speech feature encoding module may be configured: for the currently obtained speech segment feature, to obtain corresponding historical feature abstract information, and the historical feature abstract information is obtained by performing attention modeling on the prior speech segment feature using the first decoding result corresponding to the prior speech segment feature. The speech feature encoding module may comprise: a first encoder configured to encode the currently obtained speech segment feature combined with the historical feature abstract information and output a corresponding enhanced speech segment feature.

According to some embodiments, the first encoder may be configured: to use the currently obtained speech segment feature as the query feature of the first encoder and use the concatenation result of the historical feature abstract information and the currently obtained speech segment feature as the key feature and the value feature of the first encoder to output the corresponding enhanced speech segment feature.

According to some embodiments, the word-level feature extraction module may comprise: an attention module configured to, for each of the plurality of words, use the first decoding result corresponding to the word as the query feature of the attention module and use the first speech feature as the key feature and the value feature of the attention module to output the first word-level audio feature corresponding to the word.

According to some embodiments, the word-level feature extraction module may comprise: a second encoder configured to perform global encoding on the plurality of first word-level audio features corresponding to the plurality of words to output the enhanced second speech feature.

According to some embodiments, the second decoder may be configured to, for each of the plurality of words, use the first decoding result corresponding to the word as the query feature of the second decoder and use the second speech feature as the key feature and the value feature of the second decoder to output the second decoding result corresponding to the word.

According to some embodiments, the second decoder may comprise a forward decoder and a backward decoder, both the forward decoder and the backward decoder are configured to, for each of the plurality of words, use the first decoding result of the word as the input query feature, and use the second speech feature as an the input key feature and the value feature, the forward decoder is configured to perform time masking on the input feature from the left to the right, and the backward decoder is configured to perform time masking on the input feature from the right to the left.

According to some embodiments, the second decoder may be configured: to fuse the plurality of forward decoding features corresponding to the plurality of words output by the forward decoder and the plurality of backward decoding features corresponding to the plurality of words output by the backward decoder to obtain a plurality of fusion features corresponding to the plurality of words; and to obtain the plurality of second decoding results based on the plurality of fusion features.

According to some embodiments, the second decoder may be configured to: for each of the plurality of words, use the $N_{th}$ decoding result of the word as the query feature of the second decoder, and use the second speech feature as the key feature and the value feature of the second decoder to output the $N+1_{th}$ decoding result corresponding to the word, wherein N is an integer greater than or equal to 2.

According to some embodiments, the word-level feature extraction module is configured to extract a third speech feature from the first speech feature based on second a prior information, the second a prior information comprises the plurality of second decoding results, and the third speech feature comprises a plurality of second word-level audio features corresponding to the plurality of words. The second decoder may be configured to decode the third speech feature to obtain a plurality of third decoding results corresponding to the plurality of words, and the third decoding result indicates the third recognition result of the corresponding word.

According to some embodiments, the second decoder could be a large speech model.

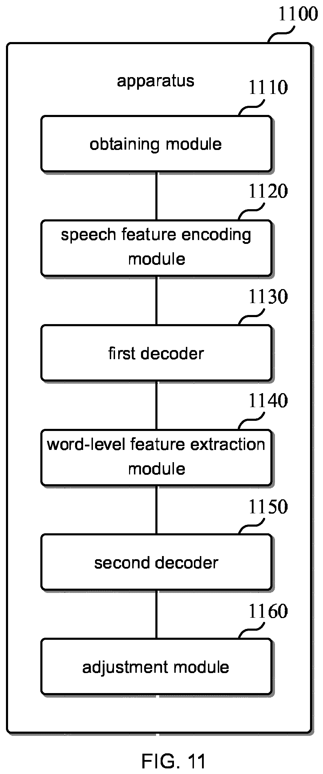

According to another aspect of the present disclosure, there is provided a training apparatus for a deep learning model for speech recognition. The deep learning model comprises a first decoder and a second decoder. As shown in Fig. 11, the training apparatus comprises: an obtaining module 1110 configured to obtain a sample speech and ground truth recognition results of a plurality of words in the sample speech; a speech feature encoding module 1120 configured to obtain a first sample speech feature of the sample speech, and the first sample speech feature comprises a plurality of sample speech segment features corresponding to a plurality of sample speech segments in the sample speech; a first decoder 1130 configured to decode the first sample speech feature to obtain a plurality of first sample decoding results corresponding to the plurality of words in the sample speech, and the first sample decoding result indicates the first recognition result of the corresponding word; a word-level feature extraction module 1140 configured to extract a second sample speech feature from the first sample speech feature based on first sample a priori information, the first sample a priori information comprises the plurality of first sample decoding results, and the second sample speech feature comprises a plurality of first sample word-level audio features corresponding to the plurality of words; a second decoder 1150 configured to decode the second sample speech feature to obtain a plurality of second sample decoding results corresponding to the plurality of words, and the second sample decoding result indicates the second recognition result of the corresponding word; and an adjustment module 1160 configured to adjust parameters of the deep learning model based on the ground truth recognition results, the first recognition results and the second recognition results of the plurality of words to obtain a trained deep learning model. It can be understood that the operations in modules 1110-1160 in the apparatus 1100 are similar to those in steps S901-S906 in FIG. 9, and details are not described herein.

The obtaining, storage, usage, processing, transmission, provision and disclosure of users' personal information involved in the technical solutions of the present disclosure are in compliance with relevant laws and regulations and do not violate public order and morals.

According to embodiments of the present disclosure, there is provided an electronical device, a readable storage medium and a computer program product.

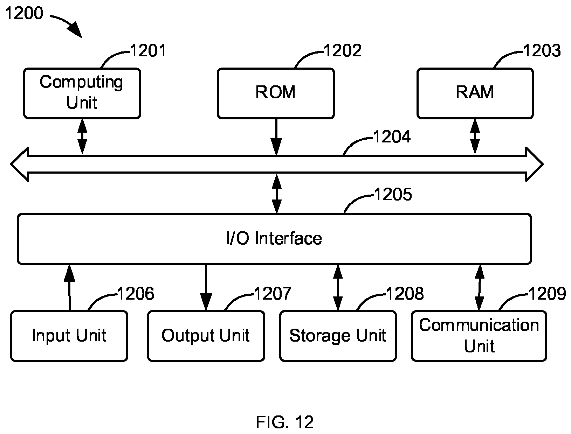

Referring to FIG. 12, a structural block diagram of an electronic device 1200 that may be a server or client of the present disclosure is now described, which is an example of a hardware device that may be applied to aspects of the present disclosure. Electronic devices are intended to represent various forms of digital electronic computer devices, such as laptop computers, desktop computers, workstations, personal digital assistants, servers, blade servers, mainframe computers, and other suitable computers. The electronic devices may also represent various forms of mobile devices, such as personal digital processing, cellular telephones, smart phones, wearable devices, and other similar computing devices. The components shown herein, their connections and relationships, and their functions are merely as examples, and are not intended to limit the implementations of the disclosure described and/or claimed herein.

As shown in FIG. 12, the electronic device 1200 includes a computing unit 1201, which may perform various appropriate actions and processing according to a computer program stored in a read-only memory (ROM) 1202 or a computer program loaded into a random access memory (RAM) 1203 from a storage unit 1208. In the RAM 1203, various programs and data required by the operation of the electronic device 1200 may also be stored. The computing unit 1201, the ROM 1202, and the RAM 1203 are connected to each other through a bus 1204. Input/output (I/O) interface 1205 is also connected to the bus 1204.

A plurality of components in the electronic device 1200 are connected to a I/O interface 1205, including: an input unit 1206, an output unit 1207, a storage unit 1208, and a communication unit 1209. The input unit 1206 may be any type of device capable of inputting information to the electronic device 1200, the input unit 1206 may receive input digital or character information and generate a key signal input related to user setting and/or function control of the electronic device, and may include, but is not limited to, a mouse, a keyboard, a touch screen, a track pad, a trackball, a joystick, a microphone, and/or a remote control. The output unit 1207 may be any type of device capable of presenting information, and may include, but are not limited to, a display, a speaker, a video/audio output terminal, a vibrator, and/or a printer. The storage unit 1208 may include, but is not limited to, a magnetic disk and an optical disk. The communication unit 1209 allows the electronic device 1200 to exchange information/data with other devices over a computer network, such as the Internet, and/or various telecommunication networks, and may include, but is not limited to, a modem, a network card, an infrared communication device, a wireless communication transceiver and/or a chipset, such as a Bluetooth device, a 802.11 device, a WiFi device, a WiMAX device, a cellular communication device, and/or the like.

The computing unit 1201 may be a variety of general and/or special purpose processing components with processing and computing capabilities. Some examples of the computing unit 1201 include, but are not limited to, a central processing unit (CPU), a graphics processing unit (GPU), various dedicated artificial intelligence (AI) computing chips, various computing units running machine learning model algorithms, a digital signal processor (DSP), and any suitable processor, controller, microcontroller, etc. The computing unit 1201 performs the various methods and processes described above, such as the speech recognition method and/or the training method for deep learning model for speech recognition. For example, in some embodiments, the speech recognition method and/or the training method for deep learning model for speech recognition may be implemented as a computer software program tangibly contained in a machine-readable medium, such as the storage unit 1208. In some embodiments, part or all of the computer program may be loaded and/or installed onto the electronic device 1200 via the ROM 1202 and/or the communication unit 1209. When the computer program is loaded to the RAM 1203 and executed by the computing unit 1201, one or more steps of the speech recognition method and/or the training method for deep learning model for speech recognition described above may be performed. Alternatively, in other embodiments, the computing unit 1201 may be configured to perform the speech recognition method and/or the training method for deep learning model for speech recognition by any other suitable means (e.g., with the aid of firmware).

Various embodiments of the systems and techniques described above herein may be implemented in a digital electronic circuit system, an integrated circuit system, a field programmable gate array (FPGA), an application specific integrated circuit (ASIC), a dedicated standard product (ASSP), a system of system on a chip system (SoC), a complex programmable logic device (CPLD), computer hardware, firmware, software, and/or combinations thereof. These various embodiments may include: implementation in one or more computer programs that may be executed and/or interpreted on a programmable system including at least one programmable processor, where the programmable processor may be a dedicated or universal programmable processor that may receive data and instructions from a storage system, at least one input device, and at least one output device, and transmit data and instructions to the storage system, the at least one input device, and the at least one output device.

The program code for implementing the method of the present disclosure may be written in any combination of one or more programming languages. These program code may be provided to a processor or controller of a general-purpose computer, a special purpose computer, or other programmable data processing device such that the program code, when executed by the processor or controller, causes the functions/operations specified in the flowchart and/or block diagram to be implemented. The program code may be executed entirely on the machine, partly on the machine, partly on the machine as a stand-alone software package and partly on the remote machine or entirely on the remote machine or server.

In the context of the present disclosure, a machine-readable medium may be a tangible medium, which may contain or store a program for use by or in connection with an instruction execution system, device, or device. The machine-readable medium may be a machine-readable signal medium or a machine-readable storage medium. The machine-readable medium may include, but is not limited to, electronic, magnetic, optical, electromagnetic, infrared, or semiconductor systems, apparatus, or devices, or any suitable combination of the foregoing. More specific examples of a machine-readable storage media may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the foregoing.

To provide interaction with a user, the systems and techniques described herein may be implemented on a computer having: a display device (e.g., a CRT (cathode ray tube) or an LCD (liquid crystal display) monitor) for displaying information to a user; and a keyboard and pointing device (e.g., a mouse or trackball) by which a user may provide input to the computer. Other types of devices may also be used to provide interaction with a user; for example, the feedback provided to the user may be any form of perception feedback (e.g., visual feedback, auditory feedback, or tactile feedback); and the input from the user may be received in any form, including acoustic input, voice input, or haptic input.

The systems and techniques described herein may be implemented in a computing system including a back-end component(e.g., as a data server), or a computing system including a middleware component (e.g., an application server), or a computing system including a front-end component (e.g., a user computer with a graphical user interface or a web browser, the user may interact with implementations of the systems and techniques described herein through the graphical user interface or the web browser), or in a computing system including any combination of such back-end components, middleware components, or front-end components. The components of the system may be interconnected by digital data communication (e.g., a communications network) in any form or medium. Examples of communication networks include a local area network (LAN), a wide area network (WAN), the Internet, and a blockchain network.

The computer system may include a client and a server. Clients and servers are generally remote from each other and typically interact through a communication network. The relationship between clients and servers is generated by computer programs running on respective computers and having a client-server relationship to each other. The server may be a cloud server, or may be a server of a distributed system, or a server incorporating a blockchain.

It should be understood that the various forms of processes shown above may be used, and the steps may be reordered, added, or deleted. For example, the steps described in the present disclosure may be performed in parallel or sequentially or in a different order, as long as the results expected by the technical solutions disclosed in the present disclosure can be achieved, and no limitation is made herein.

Although embodiments or examples of the present disclosure have been described with reference to the accompanying drawings, it should be understood that the foregoing methods, systems, and devices are merely exemplary embodiments or examples, and the scope of the present disclosure is not limited by these embodiments or examples, but is only defined by the authorized claims and their

### Claims

1. A computer-implemented speech recognition method, comprising:

    obtaining (S201) a first speech feature of a speech to-be-recognized, wherein the first speech feature comprises a plurality of speech segment features corresponding to a plurality of speech segments in the speech to-be-recognized;
    decoding (S202) the first speech feature using a first decoder to obtain a plurality of first decoding results corresponding to a plurality of words in the speech to-be-recognized, wherein each first decoding result of the plurality of first decoding results indicates a first recognition result of a word corresponding to the first decoding result;
    extracting (S203) a second speech feature from the first speech feature based on first a priori information, wherein the first a priori information comprises the plurality of first decoding results, and the second speech feature comprises a plurality of first word-level audio features corresponding to the plurality of words; and
    decoding (S204) the second speech feature using a second decoder to obtain a plurality of second decoding results corresponding to the plurality of words, wherein each second decoding result of the plurality of second decoding results indicates a second recognition result of a word corresponding to the second decoding result.

2. The method of claim 1, wherein extracting the second speech feature from the first speech feature based on the first a priori information comprises:
   for each word of the plurality of words, using the first decoding result corresponding to the word as a query feature of an attention module, and using the first speech feature as a key feature and a value feature of the attention module to obtain the first word-level audio feature corresponding to the word output by the attention module.

3. The method of claim 2, further comprises:
   before decoding the second speech feature, performing global encoding on the plurality of first word-level audio features corresponding to the plurality of words using a second encoder to enhance the second speech feature.

4. The method of any one of claims 1-3, wherein decoding the second speech feature using the second decoder to obtain the plurality of second decoding results corresponding to the plurality of words comprises:

    **for each of** the plurality of words, using the first decoding result corresponding to the word as a query feature of the second decoder, and using the second speech feature as a key feature and a value feature of the second decoder to obtain the second decoding result corresponding to the word output by the second decoder,
    and optionally, the second decoder is a large speech model.

5. The method of claim 4, wherein the second decoder comprises a forward decoder and a backward decoder, the forward decoder and the backward decoder are both configured to:

    for each word of the plurality of words, use the first decoding result of the word as a query feature for input, and use the second speech feature as a key feature and a value feature for input, wherein the forward decoder is configured to apply a left-to-right temporal mask to input features, and the backward decoder is configured to apply a right-to-left temporal mask to input features,

and optionally, for each of the plurality of words, using the first decoding result of the word as the query feature of the second decoder and using the second speech feature as the key feature and the value feature of the second decoder to obtain the second decoding result corresponding to the word output by the second decoder comprises:

fusing a plurality of forward decoding features corresponding to the plurality of words output by the forward decoder and a plurality of backward decoding features corresponding to the plurality of words output by the backward decoder to obtain a plurality of fusion features corresponding to the plurality of words; and obtaining the plurality of second decoding results based on the plurality of fusion features.

6. The method of claim 4, further comprises:
for each word of the plurality of words, using $N_{th}$ decoding result of the word as a query feature of the second decoder, and using the second speech feature as a key feature and a value feature of the second decoder to obtain $N+1_{th}$ decoding result corresponding to the word output by the second decoder, wherein N is an integer greater than or equal to 2.

7. The method of any one of claims 1-3, further comprises:

extracting a third speech feature from the first speech feature based on second a prior information, wherein the second a prior information comprises the plurality of second decoding results, and the third speech feature comprises a plurality of second word-level audio features corresponding to the plurality of words; and decoding the third speech feature using the second decoder to obtain a plurality of third decoding results corresponding to the plurality of words, wherein each third decoding result of the plurality of third decoding results indicates a third recognition result of a word corresponding to the second decoding result.

8. The method of any one of claims 1-3, wherein obtaining the first speech feature of the speech to-be-recognized comprises:

obtaining an original speech feature of the speech to-be-recognized;
determining a plurality of spikes in the speech to-be-recognized based on the original speech feature; and truncating the original speech feature to obtain the plurality of speech segment features, wherein the plurality of speech segment features is in a one-to-one correspondence with the plurality of spikes.

9. The method of claim 8, wherein the plurality of speech segment features are sequentially obtained by performing streaming truncation on the original speech feature, and decoding the first speech feature using the first decoder comprises:
sequentially performing streaming decoding on the plurality of speech segment features using the first decoder.

10. The method of claim 9, wherein obtaining the first speech feature of the speech to-be-recognized comprises:

obtaining historical feature abstract information corresponding to a currently obtained speech segment feature, wherein the historical feature abstract information is obtained by performing attention modeling on a preceding speech segment feature using a first decoding result corresponding to the preceding speech segment feature; and encoding the currently obtained speech segment feature using the first encoder with the historical feature abstract information to obtain an enhanced speech segment feature,

and optionally, encoding the currently obtained speech segment feature using the first encoder with the historical feature abstract information to enhance speech segment feature comprise:
using the currently obtained speech segment feature as a query feature of the first encoder, and using a concatenation result of the historical feature abstract information and the currently obtained speech segment feature as a key feature and a value feature of the first encoder to obtain the enhanced speech segment feature output by the first encoder.

11. The method of claim 8, wherein truncating the original speech feature to obtain the plurality of speech segment features comprises:

truncating the original speech feature based on a predetermined time length, and using the speech segment feature of the speech segment in which each spike of the plurality of spikes is located as the speech segment feature corresponding to the spike, or

truncating the original speech feature based on the plurality of spikes, and using the speech segment feature of the speech segment between every two adjacent spikes as the speech segment feature corresponding to one of the two adjacent spikes.

12. A method for training a deep learning model for speech recognition, wherein the deep learning model comprises a first decoder and a second decoder, and the training method comprises:

obtaining (S901) a sample speech and ground truth recognition results of a plurality of words in the sample speech;

obtaining (S902) a first sample speech feature of the sample speech, wherein the first sample speech feature comprises a plurality of sample speech segment features corresponding to a plurality of sample speech segments in the sample speech;

decoding (S903) the first sample speech feature using the first decoder to obtain a plurality of first sample decoding results corresponding to the plurality of words in the sample speech, wherein each first sample decoding result of the plurality of first sample decoding results indicates a first recognition result of a word corresponding to the first sample decoding result;

extracting (S904) a second sample speech feature from the first sample speech feature based on first sample a priori information, wherein the first sample a priori information comprises the plurality of first sample decoding results, and the second sample speech feature comprises a plurality of first sample word-level audio features corresponding to the plurality of words;

decoding (S905) the second sample speech feature using the second decoder to obtain a plurality of second sample decoding results corresponding to the plurality of words, wherein each second sample decoding result of the plurality of second sample decoding results indicates a second recognition result of a word corresponding to the second sample decoding result; and

adjusting (S906) parameters of the deep learning model based on the ground truth recognition results, the first recognition results, and the second recognition results of the plurality of words to obtain a trained deep learning model.

13. A speech recognition apparatus (1000), comprising:

a speech feature encoding module (1010), configured to obtain a first speech feature of a speech to-be-recognized, wherein the first speech feature comprises a plurality of speech segment features corresponding to a plurality of speech segments in the speech to-be-recognized;

a first decoder (1020), configured to decode the first speech feature to obtain a plurality of first decoding results corresponding to a plurality of words in the speech to-be-recognized, wherein each first decoding result of the plurality of first decoding results indicates a first recognition result of a word corresponding to the first decoding result;

a word-level feature extraction module (1030), configured to extract a second speech feature from the first speech feature based on first a priori information, wherein the first a priori information comprises the plurality of first decoding results, and the second speech feature comprises a plurality of first word-level audio features corresponding to the plurality of words; and

a second decoder (1040), configured to decode the second speech feature to obtain a plurality of second decoding results corresponding to the plurality of words, wherein each second decoding result of the plurality of second decoding results indicates a second recognition result of a word corresponding to the second decoding result.

14. An apparatus (1100) for training a deep learning model for speech recognition, wherein the deep learning model comprises a first decoder and a second decoder, and the training apparatus comprises:

an obtaining module (1110), configured to obtain a sample speech and ground truth recognition results of a plurality of words in the sample speech;

a speech feature encoding module (1120), configured to obtain a first sample speech feature of the sample speech, wherein the first sample speech feature comprises a plurality of sample speech segment features corresponding to a plurality of sample speech segments in the sample speech;

a first decoder (1130), configured to decode the first sample speech feature to obtain a plurality of first sample decoding results corresponding to the plurality of words in the sample speech, wherein each first sample decoding result of the plurality of first sample decoding results indicates a first recognition result of a word corresponding to the first sample decoding result;

a word-level feature extraction module (1140), configured to extract a second sample speech feature from the first sample speech feature based on first sample a priori information, wherein the first sample a priori information comprises the plurality of first sample decoding results, and the second sample speech feature comprises a plurality of first sample word-level audio features corresponding to the plurality of words;

a second decoder (1150), configured to decode the second sample speech feature to obtain a plurality of second sample decoding results corresponding to the plurality of words, wherein each second sample decoding result of the plurality of second sample decoding results indicates a second recognition result of a word corresponding to the second sample decoding result; and

an adjustment module (1160), configured to adjust parameters of the deep learning model based on the ground truth recognition results of the plurality of words, the first recognition results and the second recognition results to obtain a trained deep learning model.

**15.** A non-transient computer readable storage medium that stores computer instructions, wherein the computer instructions are used to enable the computer to execute the method of any one of claims 1-12.

**Patentansprüche**

**1.** Computerimplementiertes Spracherkennungsverfahren, das umfasst:

Erlangen (S201) eines ersten Sprachmerkmals einer zu erkennenden Sprache, wobei das erste Sprachmerkmal eine Vielzahl von Sprachsegmentmerkmalen umfasst, die einer Vielzahl von Sprachsegmenten in der zu erkennenden Sprache entspricht;

Decodieren (S202) des ersten Sprachmerkmals unter Verwendung eines ersten Decodierers, um eine Vielzahl erster Decodiererergebnisse zu erlangen, die einer Vielzahl von Wörtern in der zu erkennenden Sprache entspricht, wobei jedes erste Decodiererergebnis der Vielzahl erster Decodiererergebnisse ein erstes Erkennungsergebnis eines Wortes angibt, das dem ersten Decodiererergebnis entspricht;

Extrahieren (S203) eines zweiten Sprachmerkmals aus dem ersten Sprachmerkmal auf der Grundlage erster Vorabinformationen, wobei die ersten Vorabinformationen die Vielzahl erster Decodiererergebnisse umfassen und das zweite Sprachmerkmal eine Vielzahl erster Audiomerkmale auf Wortebene umfasst, die der Vielzahl von Wörtern entspricht; und

Decodieren (S204) des zweiten Sprachmerkmals unter Verwendung eines zweiten Decodierers, um eine Vielzahl zweiter Decodiererergebnisse zu erlangen, die der Vielzahl von Wörtern entspricht, wobei jedes zweite Decodiererergebnis der Vielzahl zweiter Decodiererergebnisse ein zweites Erkennungsergebnis eines Wortes angibt, das dem zweiten Decodiererergebnis entspricht.

**2.** Verfahren nach Anspruch 1, wobei das Extrahieren des zweiten Sprachmerkmals aus dem ersten Sprachmerkmal auf der Grundlage der ersten Vorabinformationen umfasst:

für jedes Wort der Vielzahl von Wörtern, Verwenden des ersten Decodiererergebnisses, das dem Wort entspricht, als Abfragemerkmal eines Aufmerksamkeitsmoduls, und Verwenden des ersten Sprachmerkmals als Schlüsselmerkmal und Wertmerkmal des Aufmerksamkeitsmoduls, um das erste Audiomerkmal auf Wortebene zu erlangen, das dem vom Aufmerksamkeitsmodul ausgegebenen Wort entspricht.

**3.** Verfahren nach Anspruch 2, das ferner umfasst:

vor dem Decodieren des zweiten Sprachmerkmals, Durchführen einer globalen Codierung der Vielzahl erster Audiomerkmale auf Wortebene, die der Vielzahl von Wörtern entspricht, unter Verwendung eines zweiten Codierers, um das zweite Sprachmerkmal zu verbessern.

**4.** Verfahren nach einem der Ansprüche 1 bis 3, wobei das Decodieren des zweiten Sprachmerkmals unter Verwendung des zweiten Decodierers, um die Vielzahl zweiter Decodiererergebnisse zu erlangen, die der Vielzahl von Wörtern entspricht, umfasst:

für jedes der Vielzahl von Wörtern, Verwenden des ersten Decodiererergebnisses, das dem Wort entspricht, als Abfragemerkmal des zweiten Decodierers, und Verwenden des zweiten Sprachmerkmals als Schlüsselmerkmal und Wertmerkmal des zweiten Decodierers, um das zweite Decodiererergebnis zu erlangen, das dem vom zweiten Decodierer ausgegebenen Wort entspricht,
und optional der zweite Decodierer ein großes Sprachmodell ist.

5. Verfahren nach Anspruch 4, wobei der zweite Decodierer einen Vorwärtsdecodierer und einen Rückwärtsdecodierer umfasst, wobei der Vorwärtsdecodierer und der Rückwärtsdecodierer beide konfiguriert sind, um:

für jedes Wort der Vielzahl von Wörtern das erste Decodierergebnis des Wortes als Abfragemerkmal für die Eingabe zu verwenden und das zweite Sprachmerkmal als Schlüsselmerkmal und Wertmerkmal für die Eingabe zu verwenden, wobei der Vorwärtsdecodierer konfiguriert ist, um eine von links nach rechts verlaufende zeitliche Maske auf Eingabemerkmale anzuwenden, und der Rückwärtsdecodierer konfiguriert ist, um eine von rechts nach links verlaufende zeitliche Maske auf Eingabemerkmale anzuwenden,
und optional für jedes der Vielzahl von Wörtern das erste Decodierergebnis des Wortes als Abfragemerkmal des zweiten Decodierers zu verwenden und das zweite Sprachmerkmal als Schlüsselmerkmal und Wertmerkmal des zweiten Decodierers zu verwenden, um das zweite Decodierergebnis zu erlangen, das dem vom zweiten Decodierer ausgegebenen Wort entspricht, umfasst:

Zusammenführen einer Vielzahl von Vorwärtsdecodierungsmerkmalen, die der Vielzahl von Wörtern entspricht, die vom Vorwärtsdecodierer ausgegeben wird, und einer Vielzahl von Rückwärtsdecodierungsmerkmalen, die der Vielzahl von Wörtern entspricht, die vom Rückwärtsdecodierer ausgegeben wird, um eine Vielzahl von Fusionsmerkmalen zu erlangen, die der Vielzahl von Wörtern entspricht; und
Erlangen der Vielzahl zweiter Decodierergebnisse auf der Grundlage der Vielzahl von Fusionsmerkmalen.

6. Verfahren nach Anspruch 4, das ferner umfasst:
für jedes Wort der Vielzahl von Wörtern, Verwenden eines N-ten Decodierergebnisses des Wortes als Abfragemerkmal des zweiten Decodierers und Verwenden des zweiten Sprachmerkmals als Schlüsselmerkmal und Wertmerkmal des zweiten Decodierers, um ein N+1-tes Decodierergebnis zu erlangen, das dem vom zweiten Decodierer ausgegebenen Wort entspricht, wobei N eine ganze Zahl größer oder gleich 2 ist.

7. Verfahren nach einem der Ansprüche 1 bis 3, das ferner umfasst:

Extrahieren eines dritten Sprachmerkmals aus dem ersten Sprachmerkmal auf der Grundlage zweiter Vorabinformationen, wobei die zweiten Vorabinformationen die Vielzahl zweiter Decodierergebnisse umfassen und das dritte Sprachmerkmal eine Vielzahl zweiter Audiomerkmale auf Wortebene umfasst, die der Vielzahl von Wörtern entspricht; und
Decodieren des dritten Sprachmerkmals unter Verwendung des zweiten Decodierers, um eine Vielzahl dritter Decodierergebnisse zu erlangen, die der Vielzahl von Wörtern entspricht, wobei jedes dritte Decodierergebnis der Vielzahl dritter Decodierergebnisse ein drittes Erkennungsergebnis eines Wortes angibt, das dem zweiten Decodierergebnis entspricht.

8. Verfahren nach einem der Ansprüche 1 bis 3, wobei das Erlangen des ersten Sprachmerkmals der zu erkennenden Sprache umfasst:

Erlangen eines ursprünglichen Sprachmerkmals der zu erkennenden Sprache;
Bestimmen einer Vielzahl von Spitzen in der zu erkennenden Sprache auf der Grundlage des ursprünglichen Sprachmerkmals; und
Trunkieren des ursprünglichen Sprachmerkmals, um die Vielzahl von Sprachsegmentmerkmalen zu erlangen, wobei die Vielzahl von Sprachsegmentmerkmalen in einer Eins-zu-Eins-Entsprechung mit der Vielzahl von Spitzen steht.

9. Verfahren nach Anspruch 8, wobei die Vielzahl von Sprachsegmentmerkmalen sequenziell durch Ausführen einer Streaming-Trunkierung an dem ursprünglichen Sprachmerkmal erlangt wird, und das Decodieren des ersten Sprachmerkmals unter Verwendung des ersten Decodierers umfasst:
sequentielles Durchführen einer Streaming-Decodierung an der Vielzahl von Sprachsegmentmerkmalen unter Verwendung des ersten Decodierers.

10. Verfahren nach Anspruch 9, wobei das Erlangen des ersten Sprachmerkmals der zu erkennenden Sprache umfasst:

Erlangen historischer Merkmalsabstraktionsinformationen, die einem aktuell erlangten Sprachsegmentmerkmal entsprechen, wobei die historischen Merkmalsabstraktionsinformationen durch Ausführen einer Aufmerksamkeitsmodellierung an einem vorhergehenden Sprachsegmentmerkmal unter Verwendung eines ersten Decodierergebnisses, das dem vorhergehenden Sprachsegmentmerkmal entspricht, erlangt werden; und

Codieren des aktuell erlangten Sprachsegmentmerkmals unter Verwendung des ersten Codierers mit den historischen Merkmalsabstraktionsinformationen, um ein verbessertes Sprachsegmentmerkmal zu erlangen, und optional das Codieren des aktuell erlangten Sprachsegmentmerkmals unter Verwendung des ersten Codierers mit den historischen Merkmalsabstraktionsinformationen, um das Sprachsegmentmerkmal zu verbessern, umfasst:

Verwenden des aktuell erlangten Sprachsegmentmerkmals als Abfragemerkmal des ersten Codierers und Verwenden eines Verkettungsergebnisses der historischen Merkmalsabstraktionsinformationen und des aktuell erlangten Sprachsegmentmerkmals als Schlüsselmerkmal und Wertmerkmal des ersten Codierers, um das verbesserte Sprachsegmentmerkmal zu erlangen, das vom ersten Codierer ausgegeben wird.

11. Verfahren nach Anspruch 8, wobei das Trunkieren des ursprünglichen Sprachmerkmals, um die Vielzahl von Sprachsegmentmerkmalen zu erlangen, umfasst:

Trunkieren des ursprünglichen Sprachmerkmals auf der Grundlage einer vorbestimmten Zeitlänge und Verwenden des Sprachsegmentmerkmals des Sprachsegments, in dem sich jede der Vielzahl von Spitzen befindet, als das Sprachsegmentmerkmal, das der Spitze entspricht, oder

Trunkieren des ursprünglichen Sprachmerkmals auf der Grundlage der Vielzahl von Spitzen und Verwenden des Sprachsegmentmerkmals des Sprachsegments zwischen jeweils zwei benachbarten Spitzen als das Sprachsegmentmerkmal, das einer der beiden benachbarten Spitzen entspricht.

12. Verfahren zum Trainieren eines Deep-Learning-Modells zur Spracherkennung, wobei das Deep-Learning-Modell einen ersten Decodierer und einen zweiten Decodierer umfasst, und das Trainingsverfahren umfasst:

Erlangen (S901) einer Sprachprobe und von Basis-Wahrheits-Erkennungsergebnissen einer Vielzahl von Wörtern in der Sprachprobe;

Erlangen (S902) eines ersten Sprachprobenmerkmals der Sprachprobe, wobei das erste Sprachprobenmerkmal eine Vielzahl von Sprachprobensegmentmerkmalen umfasst, die einer Vielzahl von Sprachprobensegmenten in der Sprachprobe entspricht;

Decodieren (S903) des ersten Sprachprobenmerkmals unter Verwendung des ersten Decodierers, um eine Vielzahl erster Probendecodierergebnisse zu erlangen, die der Vielzahl von Wörtern in der Sprachprobe entspricht, wobei jedes erste Probendecodierergebnis der Vielzahl erster Probendecodierergebnisse ein erstes Erkennungsergebnis eines Wortes angibt, das dem ersten Probendecodierergebnis entspricht;

Extrahieren (S904) eines zweiten Sprachprobenmerkmals aus dem ersten Sprachprobenmerkmal auf der Grundlage erster Probenvorabinformationen, wobei die ersten Probenvorabinformationen die Vielzahl erster Probendecodierergebnisse umfassen und das zweite Sprachprobenmerkmal eine Vielzahl erster Probenaudiomerkmale auf Wortebene umfasst, die der Vielzahl von Wörtern entspricht;

Decodieren (S905) des zweiten Sprachprobenmerkmals unter Verwendung des zweiten Decodierers, um eine Vielzahl zweiter Probendecodierergebnisse zu erlangen, die der Vielzahl von Wörtern entspricht, wobei jedes zweite Probendecodierergebnis der Vielzahl zweiter Probendecodierergebnisse ein zweites Erkennungsergebnis eines Wortes angibt, das dem zweiten Probendecodierergebnis entspricht; und

Anpassen (S906) von Parametern des Deep-Learning-Modells auf der Grundlage der Basis-Wahrheits-Erkennungsergebnisse, der ersten Erkennungsergebnisse und der zweiten Erkennungsergebnisse der Vielzahl von Wörtern, um ein trainiertes Deep-Learning-Modell zu erlangen.

13. Spracherkennungsvorrichtung (1000), die umfasst:

ein Sprachmerkmalcodiermodul (1010), das konfiguriert ist, um ein erstes Sprachmerkmal einer zu erkennenden Sprache zu erlangen, wobei das erste Sprachmerkmal eine Vielzahl von Sprachsegmentmerkmalen umfasst, die einer Vielzahl von Sprachsegmenten in der zu erkennenden Sprache entspricht;

einen ersten Decodierer (1020), der konfiguriert ist, um das erste Sprachmerkmal zu decodieren, um eine Vielzahl erster Decodierergebnisse zu erlangen, die einer Vielzahl von Wörtern in der zu erkennenden Sprache entspricht, wobei jedes erste Decodierergebnis der Vielzahl erster Decodierergebnisse ein erstes Erkennungsergebnis eines Wortes angibt, das dem ersten Decodierergebnis entspricht;

ein Wortebenenmerkmalsextraktionsmodul (1030), das konfiguriert ist, um ein zweites Sprachmerkmal aus dem ersten Sprachmerkmal auf der Grundlage erster Vorabinformationen zu extrahieren, wobei die ersten Vorabinformationen die Vielzahl erster Decodierergebnisse umfassen und das zweite Sprachmerkmal eine Vielzahl erster Audiomerkmale auf Wortebene umfasst, die der Vielzahl von Wörtern entspricht; und

einen zweiten Decodierer (1040), der konfiguriert ist, um das zweite Sprachmerkmal zu decodieren, um eine Vielzahl zweiter Decodierergebnisse zu erlangen, die der Vielzahl von Wörtern entspricht, wobei jedes zweite Decodierergebnis der Vielzahl zweiter Decodierergebnisse ein zweites Erkennungsergebnis eines Wortes angibt, das dem zweiten Decodierergebnis entspricht.

14. Vorrichtung (1100) zum Trainieren eines Deep-Learning-Modells zur Spracherkennung, wobei das Deep-Learning-Modell einen ersten Decodierer und einen zweiten Decodierer umfasst, und die Trainingsvorrichtung umfasst:

ein Erfassungsmodul (1110), das konfiguriert ist, um eine Sprachprobe und Basis-Wahrheits-Erkennungsergebnisse einer Vielzahl von Wörtern in der Sprachprobe zu erlangen;

ein Sprachmerkmalcodiermodul (1120), das konfiguriert ist, um ein erstes Sprachprobenmerkmal der Sprachprobe zu erlangen, wobei das erste Sprachprobenmerkmal eine Vielzahl von Sprachprobensegmentmerkmalen umfasst, die einer Vielzahl von Sprachprobensegmenten in der Sprachprobe entspricht;

einen ersten Decodierer (1130), der konfiguriert ist, um das erste Sprachprobenmerkmal zu decodieren, um eine Vielzahl erster Probendecodierergebnisse zu erlangen, die der Vielzahl von Wörtern in der Sprachprobe entspricht, wobei jedes erste Probendecodierergebnis der Vielzahl erster Probendecodierergebnisse ein erstes Erkennungsergebnis eines Wortes angibt, das dem ersten Probendecodierergebnis entspricht;

ein Wortebenenmerkmalsextraktionsmodul (1140), das konfiguriert ist, um ein zweites Sprachprobenmerkmal aus dem ersten Sprachprobenmerkmal auf der Grundlage erster Probenvorabinformationen zu extrahieren, wobei die ersten Probenvorabinformationen die Vielzahl erster Probendecodierergebnisse umfassen und das zweite Sprachprobenmerkmal eine Vielzahl erster Probenaudiomerkmale auf Wortebene umfasst, die der Vielzahl von Wörtern entspricht;

einen zweiten Decodierer (1150), der konfiguriert ist, um das zweite Sprachprobenmerkmal zu decodieren, um eine Vielzahl zweiter Probendecodierergebnisse zu erlangen, die der Vielzahl von Wörtern entspricht, wobei jedes zweite Probendecodierergebnis der Vielzahl zweiter Probendecodierergebnisse ein zweites Erkennungsergebnis eines Wortes angibt, das dem zweiten Probendecodierergebnis entspricht; und

ein Anpassungsmodul (1160), das konfiguriert ist, um Parameter des Deep-Learning-Modells auf der Grundlage der Basis-Wahrheits-Erkennungsergebnisse der Vielzahl von Wörtern, der ersten Erkennungsergebnisse und der zweiten Erkennungsergebnisse anzupassen, um ein trainiertes Deep-Learning-Modell zu erlangen.

15. Nichtflüchtiges, computerlesbares Speichermedium, das Computeranweisungen speichert, wobei die Computeranweisungen verwendet werden, um den Computer in die Lage zu versetzen, das Verfahren nach einem der Ansprüche 1 bis 12 auszuführen.

## Revendications

1. Procédé de reconnaissance de parole mis en œuvre par ordinateur, comprenant:

l'obtention (S201) d'une première caractéristique de parole d'une parole à reconnaître, dans lequel la première caractéristique de parole comprend une pluralité de caractéristiques de segments de parole correspondant à une pluralité de segments de parole dans la parole à reconnaître;

le décodage (S202) de la première caractéristique de parole à l'aide d'un premier décodeur afin d'obtenir une pluralité de premiers résultats de décodage correspondant à une pluralité de mots dans la parole à reconnaître, dans lequel chaque premier résultat de décodage de la pluralité de premiers résultats de décodage indique un premier résultat de reconnaissance d'un mot correspondant au premier résultat de décodage;

l'extraction (S203) d'une deuxième caractéristique de parole à partir de la première caractéristique de parole sur la base des premières informations a priori, dans lequel les premières informations a priori comprennent la pluralité de premiers résultats de décodage, et la deuxième caractéristique de parole comprend une pluralité de premières caractéristiques audio au niveau des mots correspondant à la pluralité de mots; et

le décodage (S204) de la deuxième caractéristique de parole à l'aide d'un deuxième décodeur afin d'obtenir une pluralité de deuxièmes résultats de décodage correspondant à une pluralité de mots dans la parole à reconnaître, dans lequel chaque deuxième résultat de décodage de la pluralité de deuxièmes résultats de décodage indique un deuxième résultat de reconnaissance d'un mot correspondant au deuxième résultat de décodage.

2. Procédé selon la revendication 1, dans lequel l'extraction de la deuxième caractéristique de parole à partir de la première caractéristique de parole sur la base des premières informations a priori comprennent:
pour chaque mot de la pluralité de mots, l'utilisation du premier résultat de décodage correspondant au mot comme caractéristique d'interrogation d'un module d'attention, et l'utilisation de la première caractéristique de parole comme caractéristique clé et caractéristique de valeur du module d'attention pour obtenir la première caractéristique audio au niveau du mot correspondant au mot délivré par le module d'attention.

3.  Procédé selon la revendication 2, comprenant en outre:
avant le décodage de la deuxième caractéristique de parole, la réalisation d'un encodage global sur la pluralité de premières caractéristiques audio au niveau des mots correspondant à la pluralité de mots à l'aide d'un deuxième encodeur afin d'améliorer la deuxième caractéristique de parole.

4.  Procédé selon l'une quelconque des revendications 1 à 3, dans lequel le décodage de la deuxième caractéristique de parole à l'aide du deuxième décodeur afin d'obtenir la pluralité de deuxièmes résultats de décodage correspondant à la pluralité de mots comprend:

    pour chacun de la pluralité des mots, l'utilisation du premier résultat de décodage correspondant au mot comme caractéristique d'interrogation du deuxième décodeur, et l'utilisation de la deuxième caractéristique de parole comme caractéristique clé et caractéristique de valeur du deuxième décodeur afin d'obtenir le deuxième résultat de décodage correspondant au mot délivré par le deuxième décodeur,
    et éventuellement, le deuxième décodeur est un grand modèle vocal.

5.  Procédé selon la revendication 4, dans lequel le deuxième décodeur comprend un décodeur avant et un décodeur arrière, le décodeur avant et le décodeur arrière étant tous deux configurés pour:

    pour chaque mot de la pluralité de mots, utiliser le premier résultat de décodage du mot comme caractéristique d'interrogation pour l'entrée, et utiliser la deuxième caractéristique de parole comme caractéristique clé et caractéristique de valeur pour l'entrée, dans lequel le décodeur direct est configuré pour appliquer un masque temporel de gauche à droite aux caractéristiques d'entrée, et le décodeur arrière est configuré pour appliquer un masque temporel de droite à gauche aux caractéristiques d'entrée,
    et, éventuellement, pour chaque mot de la pluralité des mots, l'utilisation du premier résultat de décodage du mot comme caractéristique d'interrogation du deuxième décodeur et l'utilisation de la deuxième caractéristique de parole comme caractéristique clé et caractéristique de valeur du deuxième décodeur afin d'obtenir le deuxième résultat de décodage correspondant au mot délivré par le deuxième décodeur, consistent à:

        fusionner une pluralité de caractéristiques de décodage avant correspondant à la pluralité de mots délivrés par le décodeur avant et une pluralité de caractéristiques de décodage arrière correspondant à la pluralité de mots délivrés par le décodeur arrière afin d'obtenir une pluralité de caractéristiques de fusion correspondant à la pluralité de mots; et
        obtenir la pluralité de deuxièmes résultats de décodage sur la base de la pluralité de caractéristiques de fusion.

6.  Procédé selon la revendication 4, comprenant en outre:
pour chaque mot de la pluralité des mots, l'utilisation le $N_{\text{ième}}$ résultat de décodage du mot comme caractéristique d'interrogation du deuxième décodeur, et l'utilisation de la deuxième caractéristique de parole comme caractéristique clé et caractéristique de valeur du deuxième décodeur pour obtenir le $N + 1_{\text{ième}}$ résultat de décodage correspondant au mot délivré par le deuxième décodeur, N étant un nombre entier supérieur ou égal à 2.

7.  Procédé selon l'une quelconque des revendications 1 à 3, comprenant en outre:

    l'extraction d'une troisième caractéristique de parole à partir de la première caractéristique de parole sur la base de deuxièmes informations a priori, dans lequel les deuxièmes informations a priori comprennent la pluralité de deuxièmes résultats de décodage, et la troisième caractéristique de parole comprend une pluralité de deuxièmes caractéristiques audio au niveau des mots correspondant à la pluralité de mots; et
    le décodage de la troisième caractéristique de parole à l'aide d'un deuxième décodeur afin d'obtenir une pluralité de troisièmes résultats de décodage correspondant à une pluralité de mots, dans lequel chaque troisième résultat de décodage de la pluralité de troisièmes résultats de décodage indique un troisième résultat de reconnaissance d'un mot correspondant au deuxième résultat de décodage.

8. Procédé selon l'une quelconque des revendications 1 à 3, dans lequel l'obtention de la première caractéristique de parole du discours à reconnaître comprend:

> l'obtention d'une caractéristique de parole originale de la parole à reconnaître;
> la détermination d'une pluralité de pics dans la parole à reconnaître sur la base de la caractéristique de parole originale; et
> la troncature de la caractéristique de parole originale pour obtenir la pluralité de caractéristiques de segments vocaux, dans lequel la pluralité de caractéristiques de segments vocaux est en correspondance biunivoque avec la pluralité de pics.

9. Procédé selon la revendication 8, dans lequel la pluralité des caractéristiques de segments vocaux est obtenue séquentiellement par troncature en continu sur la caractéristique de parole originale, et le décodage de la première caractéristique de parole à l'aide du premier décodeur comprend:
la réalisation séquentielle du décodage en continu sur la pluralité de caractéristiques de segment vocal à l'aide du premier décodeur.

10. Procédé selon la revendication 9, dans lequel l'obtention de la première caractéristique de parole de la parole à reconnaître consiste à:

> obtenir des informations abstraites d'historique correspondant à une caractéristique de segment vocal actuellement obtenue, les informations abstraites d'historique étant obtenues en effectuant une modélisation de l'attention sur une caractéristique de segment vocal précédent à l'aide d'un premier résultat de décodage correspondant à la caractéristique de segment vocal précédent; et
> coder la caractéristique de segment vocal actuellement obtenu à l'aide du premier encodeur avec les informations abstraites de caractéristique d'historique afin d'obtenir une caractéristique améliorée de segment vocal, et, éventuellement, le codage de la caractéristique de segment vocal actuellement obtenu à l'aide du premier encodeur avec les informations abstraites de caractéristique d'historique afin d'améliorer la caractéristique de segment vocal, consistant à:
> utiliser la caractéristique de segment vocal actuellement obtenue comme caractéristique d'interrogation du premier encodeur, et utiliser un résultat de concaténation des informations abstraites de caractéristique d'historique et de la caractéristique de segment vocal actuellement obtenue comme caractéristique clé et caractéristique de valeur du premier codeur afin d'obtenir la caractéristique de segment vocal améliorée délivrée par le premier encodeur.

11. Procédé selon la revendication 8, dans lequel la troncature de la caractéristique de parole originale pour obtenir la pluralité de caractéristiques de segment vocal consiste à:

> tronquer la caractéristique de parole originale sur la base d'une durée prédéterminée, et utiliser la caractéristique de parole du segment vocal dans lequel se trouve chaque pic de la pluralité de pics comme caractéristique de parole correspondant au pic, ou
> tronquer la caractéristique de parole originale sur la base de la pluralité de pics, et utiliser la caractéristique de parole du segment vocal entre chaque paire de pics adjacents comme caractéristique de segment vocal correspondant à l'un des deux pics adjacents.

12. Procédé d'entraînement d'un modèle d'apprentissage profond pour la reconnaissance vocale, dans lequel le modèle d'apprentissage profond comprend un premier décodeur et un deuxième décodeur, et le procédé d'entraînement comprend:

> l'obtention (S901) d'une parole échantillon et des résultats de reconnaissance de la réalité de terrain d'une pluralité de mots dans la parole échantillon;
> l'obtention (S902) d'une première caractéristique de parole échantillon de la parole échantillon, dans lequel la première caractéristique de parole échantillon comprend une pluralité de caractéristiques de segment vocal échantillons correspondant à une pluralité de segments vocaux dans la parole échantillon;
> le décodage (S903) de la première caractéristique de parole échantillon à l'aide d'un premier décodeur afin d'obtenir une pluralité de premiers résultats de décodage échantillon correspondant à une pluralité de mots dans la parole échantillon, dans lequel chaque premier résultat de décodage échantillon de la pluralité de premiers résultats de décodage échantillon indique un premier résultat de reconnaissance d'un mot correspondant au premier résultat de décodage échantillon;

l'extraction (S904) d'une deuxième caractéristique de parole échantillon à partir de la première caractéristique de parole échantillon sur la base des premières informations a priori échantillons, dans lequel les premières informations a priori échantillons comprennent la pluralité de premiers résultats de décodage échantillon, et la deuxième caractéristique de parole échantillon comprend une pluralité de premières caractéristiques audio au niveau des mots correspondant à la pluralité de mots;

le décodage (S905) de la deuxième caractéristique de parole échantillon à l'aide d'un deuxième décodeur afin d'obtenir une pluralité de deuxièmes résultats de décodage échantillon correspondant à une pluralité de mots, dans lequel chaque deuxième résultat de décodage échantillon de la pluralité de deuxièmes résultats de décodage échantillon indique un deuxième résultat de reconnaissance d'un mot correspondant au deuxième résultat de décodage échantillon;

l'ajustement (S906) des paramètres du modèle d'apprentissage profond sur la base des résultats de reconnaissance de la réalité de terrain, des premiers résultats de reconnaissance, et des seconds résultats de reconnaissance de la pluralité de mots afin d'obtenir un modèle d'apprentissage profond entraîné.

13. Appareil de reconnaissance de parole (1000), comprenant:

un module de codage de caractéristique de parole (1010), configuré pour obtenir une première caractéristique de parole d'une parole à reconnaître, dans lequel la première caractéristique de parole comprend une pluralité de caractéristiques de segments de parole correspondant à une pluralité de segments de parole dans la parole à reconnaître;

un premier décodeur (1020), configuré pour décoder la première caractéristique de parole afin d'obtenir une pluralité de premiers résultats de décodage correspondant à une pluralité de mots dans la parole à reconnaître, dans lequel chaque premier résultat de décodage de la pluralité de premiers résultats de décodage indique un premier résultat de reconnaissance d'un mot correspondant au premier résultat de décodage;

un module d'extraction de caractéristique au niveau des mots (1030), configuré pour extraire une deuxième caractéristique de parole à partir de la première caractéristique de parole sur la base des premières informations a priori, dans lequel les premières informations a priori comprennent la pluralité de premiers résultats de décodage, et la deuxième caractéristique de parole comprend une pluralité de premières caractéristiques audio au niveau des mots correspondant à la pluralité de mots; et

un deuxième décodeur (1040), configuré pour décoder la deuxième caractéristique de parole afin d'obtenir une pluralité de deuxièmes résultats de décodage correspondant à une pluralité de mots dans la parole à reconnaître, dans lequel chaque deuxième résultat de décodage de la pluralité de deuxièmes résultats de décodage indique un deuxième résultat de reconnaissance d'un mot correspondant au deuxième résultat de décodage.

14. Appareil (1100) permettant d'entraîner un modèle d'apprentissage profond pour la reconnaissance vocale, dans lequel le modèle d'apprentissage profond comprend un premier décodeur et un deuxième décodeur, et l'appareil d'entraînement comprend:

un module d'obtention (1110), configuré pour obtenir une parole échantillon et des résultat de reconnaissance de réalité de terrain d'une pluralité de mots dans la parole échantillon;

un module de codage de caractéristique de parole (1120), configuré pour obtenir une première caractéristique de parole échantillon d'une parole échantillon, dans lequel la première caractéristique de parole échantillon comprend une pluralité de caractéristiques de segments de parole échantillon correspondant à une pluralité de segments de parole dans la parole échantillon;

un premier décodeur (1130), configuré pour décoder la première caractéristique de parole échantillon afin d'obtenir une pluralité de premiers résultats de décodage échantillon correspondant à la pluralité de mots dans la parole échantillon, dans lequel chaque premier résultat de décodage échantillon de la pluralité de premiers résultats de décodage échantillon indique un premier résultat de reconnaissance d'un mot correspondant au premier résultat de décodage échantillon;

un module d'extraction de caractéristique au niveau des mots (1140), configuré pour extraire une deuxième caractéristique de parole échantillon à partir de la première caractéristique de parole échantillon sur la base des premières informations a priori échantillons, dans lequel les premières informations a priori échantillons comprennent la pluralité de premiers résultats de décodage échantillon, et la deuxième caractéristique de parole échantillon comprend une pluralité de premières caractéristiques audio au niveau des mots échantillons correspondant à la pluralité de mots;

un deuxième décodeur (1150), configuré pour décoder la deuxième caractéristique de parole échantillon afin d'obtenir une pluralité de deuxièmes résultats de décodage échantillon correspondant à une pluralité de mots, dans lequel chaque deuxième résultat de décodage échantillon de la pluralité de deuxièmes résultats de décodage échantillon indique un deuxième résultat de reconnaissance d'un mot correspondant au deuxième résultat de décodage échantillon; et

un module d'ajustement (1160), configuré pour ajuster les paramètres du modèle d'apprentissage profond sur la base des résultats de reconnaissance de la réalité de terrain de la pluralité de mots, des premiers résultats de reconnaissance et des deuxièmes résultats de reconnaissance afin d'obtenir un modèle d'apprentissage profond entraîné.

15. Support d'enregistrement non transitoire lisible par ordinateur qui stocke des instructions informatiques, dans lequel les instructions informatiques sont utilisées pour permettre à l'ordinateur d'exécuter le procédé selon l'une quelconque des revendications 1 à 12.

FIG. 1

S201

obtaining a first speech feature of a speech to-be-recognized

S202

decoding the first speech feature using a first decoder to obtain a plurality of first decoding results corresponding to a plurality of words in the speech to-be-recognized

S203

extracting a second speech feature from the first speech feature based on first a priori information

S204

decoding the second speech feature using a second decoder to obtain a plurality of second decoding results corresponding to the plurality of words

FIG. 2

S201

obtaining an original speech feature of the speech to-be-recognized

S301

determining a plurality of spikes in the speech to-be-recognized based on the original speech feature

S302

truncating the original speech feature to obtain the plurality of speech segment features

S303

obtaining historical feature abstract information corresponding to a currently obtained speech segment feature

S304

encoding the currently obtained speech segment feature using the first encoder with the historical feature abstract information to obtain an enhanced speech segment feature

S305

FIG. 3

FIG. 4

S203

for each word of the plurality of words, using the first decoding result corresponding to the word as a query feature of an attention module, and using the first speech feature as a key feature and a value feature of the attention module to obtain the first word-level audio feature corresponding to the word output by the attention module

S501

performing global encoding on the plurality of first word-level audio features corresponding to the plurality of words using a second encoder to enhance the second speech feature

S502

FIG. 5

obtaining a first speech feature of a speech to-be-recognized

S601

decoding the first speech feature using a first decoder to obtain a plurality of first decoding results corresponding to a plurality of words in the speech to-be-recognized

S602

extracting a second speech feature from the first speech feature based on first a priori information

S603

decoding the second speech feature using a second decoder to obtain a plurality of second decoding results corresponding to the plurality of words

S604

for each word of the plurality of words, using $N_{th}$ decoding result of the word as a query feature of the second decoder, and using the second speech feature as a key feature and a value feature of the second decoder to obtain $N+1_{th}$ decoding result corresponding to the word output by the second decoder

S605

FIG. 6

```
                                                              S701
┌─────────────────────────────────────────────────────────┐
│     obtaining a first speech feature of a speech           │
│              to-be-recognized                              │
└─────────────────────────────────────────────────────────┘
                          │
                          ▼                                   S702
┌─────────────────────────────────────────────────────────┐
│  decoding the first speech feature using a first decoder  │
│  to obtain a plurality of first decoding results           │
│  corresponding to a plurality of words                     │
│  in the speech to-be-recognized                            │
└─────────────────────────────────────────────────────────┘
                          │
                          ▼                                   S703
┌─────────────────────────────────────────────────────────┐
│  extracting a second speech feature from the first speech  │
│  feature based on first a priori information               │
└─────────────────────────────────────────────────────────┘
                          │
                          ▼                                   S704
┌─────────────────────────────────────────────────────────┐
│  decoding the second speech feature using a second        │
│  decoder to obtain a plurality of second decoding results  │
│  corresponding to the plurality of words                   │
└─────────────────────────────────────────────────────────┘
                          │
                          ▼                                   S705
┌─────────────────────────────────────────────────────────┐
│  extracting a third speech feature from the first speech   │
│  feature based on second a prior information               │
└─────────────────────────────────────────────────────────┘
                          │
                          ▼                                   S706
┌─────────────────────────────────────────────────────────┐
│  decoding the third speech feature using the second       │
│  decoder to obtain a plurality of third decoding results   │
│  corresponding to the plurality of words                   │
└─────────────────────────────────────────────────────────┘
```

FIG. 7

**Repeat B iterations**

**second decoding result**

**Non-autoregressive NAR**

800

**second decoder 850**

(large speech/audio model)

**first decoding result**

priori initialization

**forward decoder 860**

**backward decoder 870**

**first decoder 820**

$u_0$ ··· $u_L$

second speech feature

| $h_0$ | $h_1$ | $h_2$ | ··· | $h_i$ | ··· | $h_T$ |

**attention module 830**

**second encoder 840**

first speech feature

**first encoder 810**

speech to-be-recognized

FIG. 8

S901

obtaining a sample speech and ground truth recognition results of a plurality of words in the sample speech

S902

obtaining a first sample speech feature of the sample speech

S903

decoding the first sample speech feature using the first decoder to obtain a plurality of first sample decoding results corresponding to the plurality of words in the sample speech

S904

extracting a second sample speech feature from the first sample speech feature based on first sample a priori information

S905

decoding the second sample speech feature using the second decoder to obtain a plurality of second sample decoding results corresponding to the plurality of words

S906

adjusting parameters of the deep learning model based on the ground truth recognition results, the first recognition results, and the second recognition results of the plurality of words to obtain a trained deep learning model

FIG. 9

1000

apparatus 1010

speech feature encoding
module

1020

first decoder

1030

word-level feature extraction
module

1040

second decoder

FIG. 10

1100

apparatus

1110

obtaining module

1120

speech feature encoding module

1130

first decoder

1140

word-level feature extraction module

1150

second decoder

1160

adjustment module

FIG. 11

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021225699 A1